# EUROPEAN PATENT APPLICATION

(11) **EP 4 831 025 A1**
(43) Date of publication of application: **28.10.2026**
(21) Application number: 26174173.0
(22) Date of filing: 23.04.2026
(51) Int. Cl.: B60W 30/09, B60W 10/18, B60W 30/095, B60W 40/105, B60W 50/00

(54) **CONTROL METHOD, CONTROL APPARATUS, COMPUTER-READABLE STOREAGE MEDIUM, AND ELECTRONIC DEVICE FOR A VEHICLE**

(30) Priority: 27.04.2025 CN 202510548674
(71) Applicant: Shanghai Horizon Intelligent Automotive Technology Co., Ltd., Shanghai Jiading District 201800 (CN)
(72) Inventor: PEI, Xizhe, Anting Town, Jiading District, Shanghai, 201800 (CN); QI, Lianjun, Anting Town, Jiading District, Shanghai, 201800 (CN); ZENG, Luyao, Anting Town, Jiading District, Shanghai, 201800 (CN)
(74) Representative: Becker Kurig & Partner Patentanwälte mbB

(57) **Abstract**

Embodiments of the present disclosure disclose a control method, a control apparatus, a computer-readable storage medium, and an electronic device for a vehicle. The method includes: determining a collision risk between a vehicle and an obstacle; in response to the collision risk indicating that a collision risk exists between the vehicle and the obstacle at a future time, determining a reachable set in a speed-travel distance space; determining distribution information of travel distance and speed of the vehicle at the future time; determining a triggering state of an AEB function based on the reachable set and the distribution information; and controlling the vehicle to travel based on the triggering state. The embodiments of the present disclosure may improve accuracy and effectiveness of timing for issuing an AEB braking signal, thereby enhancing safety of an AEB function.

## Description

### TECHNICAL FIELD

The present disclosure relates to intelligent driving technologies, and particularly, to a control method, a control apparatus, a computer-readable storage medium, and an electronic device for a vehicle.

### BACKGROUND ART

**In** the field of intelligent driving, an Automatic Emergency Braking (AEB) function is an active safety control function of a vehicle during traveling, which is capable of automatically taking measures to assist a driver in avoiding or mitigating collisions in situations where the driver brakes too late, applies insufficient braking force, or fails to take any braking measures. In the related art, Time to Collision (TTC) is typically calculated based on kinematic states of an ego vehicle and an obstacle, and then whether to trigger the AEB function is determined based on a comparison between the TTC and a threshold. Due to potential deviations in TTC estimation, determining whether to initiate emergency braking based on such a simple calculation might lead to missed triggering or false triggering of the AEB. Missed triggering exposes the vehicle to a risk of a severe collision, thus failing to meet increasingly stringent safety requirements; while false triggering causes the vehicle to perform emergence braking in the absence of collision risks, affecting user ride experience and thus failing to meet ride comfort requirements.

### SUMMARY OF THE DISCLOSURE

Embodiments of the present disclosure provide a control method, a control apparatus, a computer-readable storage medium, and an electronic device for a vehicle, to improve accuracy and effectiveness of timing for issuing an AEB braking signal, thereby enhancing safety of an AEB function and improving user riding experience.

A first aspect of the embodiments of the present disclosure provides a control method for a vehicle, comprising: determining a collision risk between a vehicle and an obstacle; in response to the collision risk indicating that a collision risk exists between the vehicle and the obstacle at a future time, determining a reachable set in a speed-travel distance space; determining distribution information of travel distance and speed of the vehicle at the future time; determining a triggering state of an AEB function based on the reachable set and the distribution information; and controlling the vehicle to travel based on the triggering state.

A second aspect of the embodiments of the present disclosure provides a control apparatus for a vehicle, comprising: a first processing module for determining a collision risk between a vehicle and an obstacle; a second processing module for, in response to the collision risk indicating that a collision risk exists between the vehicle and the obstacle at a future time, determining a reachable set in a speed-travel distance space; a third processing module for determining distribution information of travel distance and speed of the vehicle at the future time; a fourth processing module for determining a triggering state of an AEB function based on the reachable set and the distribution information; and a fifth processing module for controlling the vehicle to travel based on the triggering state.

A third aspect of the embodiments of the present disclosure provides a computer-readable storage medium storing a computer program that is executed by a processor for implementing the control method for a vehicle described in any of the above embodiments of the present disclosure.

A fourth aspect of the embodiments of the present disclosure provides an electronic device for a vehicle, comprising: a processor; and a memory for storing executable instructions for the processor; wherein the processor is configured to read the executable instructions from the memory and execute the instructions to implement the control method for a vehicle described in any of the above embodiments of the present disclosure.

A fifth aspect of the embodiments of the present disclosure provides a computer program product embodied with instructions, within which instructions, when executed by a processor, to perform the control method for a vehicle in any of the above embodiments of the present disclosure.

Based on the control method, the control apparatus, the computer-readable storage medium, and the electronic device for a vehicle provided in the aforementioned embodiments of the present disclosure, in a situation where a collision risk is issued during a collision risk assessment stage (i.e., a collision risk indicates that a collision risk exists between the vehicle and an obstacle at a future time), a triggering state of an AEB function is determined based on a reachable set in a speed-travel distance space and distribution information of travel distance and speed of the vehicle at a future time. In the speed-travel distance space, the reachable set characterizes that an initial reachable region corresponding to each initial subset in the reachable set will evolve to a target reachable region corresponding to a target subset in the reachable set over a certain period of dynamic evolution. The target reachable region characterizes various possible speeds and travel distances during a process from the vehicle reaching a collision critical point to passing through a collision point. The distribution information of speed and travel distance of the vehicle at the future time characterizes a joint distribution of speed and travel distance of the vehicle at the future time. In case that the distribution of speed and travel distance of the vehicle at the future time is located within a reachable region corresponding to the reachable set, it indicates that a state of the vehicle (i.e., a speed and a travel distance) may evolve into a state interval where a collision with an obstacle occurs (i.e., the target reachable region corresponding to the target subset) over a certain period of dynamic evolution, if the vehicle travels according to the distribution information of speed and travel distance at the future time. Accordingly, the triggering state of the AEB function may be effectively determined by considering a relationship between the distribution information of speed and travel distance of the vehicle at the future time and the reachable set. Compared to triggering the AEB function based on a simply calculation of TTC, the methods of the embodiments of the present disclosure comprehensively considers the reachable set in which speeds and travel distances of the vehicle are capable of reaching a collision state before a collision, thereby effectively improving accuracy and effectiveness of triggering the AEB function and avoiding or reducing missed triggers and false triggers, thus enhancing the safety of the AEB function and improving user ride comfort, such that the AEB function may satisfy increasingly higher safety requirements and user requirements for ride comfort.

### BRIEF DESCRIPTION OF DRAWINGS

Figure 1 illustrates an exemplary application scenario of a control method for a vehicle, provided by the present disclosure;
Figure 2 is a flow schematic diagram of a control method for a vehicle, provided by an exemplary embodiment of the present disclosure;
Figure 3 is a flow schematic diagram of a control method for a vehicle, provided by another exemplary embodiment of the present disclosure;
Figure 4 is a schematic diagram of collision indication vector distribution information provided by an exemplary embodiment of the present disclosure;
Figure 5 is a schematic diagram of a target reachable region provided by an exemplary embodiment of the present disclosure;
Figure 6 is a schematic diagram of a reachable set provided by an exemplary embodiment of the present disclosure;
Figure 7 is a schematic diagram of a collision region provided by an exemplary embodiment of the present disclosure;
Figure 8 is a flow schematic diagram of a control method for a vehicle, provided by yet another exemplary embodiment of the present disclosure;
Figure 9 is a flow schematic diagram of a control method for a vehicle, provided by still another exemplary embodiment of the present disclosure;
Figure 10 is a flow schematic diagram of a control method for a vehicle, provided by yet another exemplary embodiment of the present disclosure;
Figure 11 is a schematic diagram of an integration principle provided by an exemplary embodiment of the present disclosure;
Figure 12 is a flow schematic diagram of a control method for a vehicle, provided by still another exemplary embodiment of the present disclosure;
Figure 13 is a schematic diagram of a state of a vehicle over an entire time period starting from a current time, provided by an exemplary embodiment of the present disclosure;
Figure 14 is a schematic diagram of distribution information of travel distance and speed of a vehicle at a future time, provided by an exemplary embodiment of the present disclosure;
Figure 15 is a schematic diagram of an integral result of distribution information at a single future time under reachable subsets, provided by an exemplary embodiment of the present disclosure;
Figure 16 is a structural schematic diagram of a control apparatus for a vehicle, provided by an exemplary embodiment of the present disclosure;
Figure 17 is a structural schematic diagram of a control apparatus for a vehicle, provided by another exemplary embodiment of the present disclosure;
Figure 18 is a structural schematic diagram of a control apparatus for a vehicle, provided by yet another exemplary embodiment of the present disclosure; and
Figure 19 is a structural diagram of an electronic device provided by the disclosed embodiment.

### DETAILED DESCRIPTION OF THE EMBODIMENTS

In order to explain the present disclosure, exemplary embodiments of the present disclosure will be described in detail below with reference to the Drawings. Apparently, the described embodiments are only a part, not all, of the embodiments of the present disclosure. It should be understood that, the present disclosure is not limited by the exemplary embodiments.

It should be noted that, unless otherwise specifically stated, relative arrangement of components and steps, numerical expressions, and numerical values set forth in these embodiments do not limit the scope of the present disclosure.

### An overview of the present disclosure

In the process of implementing the present disclosure, the inventors found that, in the field of intelligent driving, in related art of an automatic emergency braking (AEB) function, Time to Collision (TTC) is typically calculated based on kinematic states of an ego vehicle and an obstacle, and then whether to trigger the AEB function is determined based on a comparison between the TTC and a threshold. Due to potential deviations in TTC estimation, determining whether to initiate emergency braking based on such a simple calculation might lead to missed triggering or false triggering of the AEB. Missed triggering exposes the vehicle to a risk of a severe collision, thus failing to meet increasingly stringent safety requirements; while false triggering causes the vehicle to perform emergence braking in the absence of collision risks, affecting user ride experience and failing to meet ride comfort requirements.

### An exemplary overview

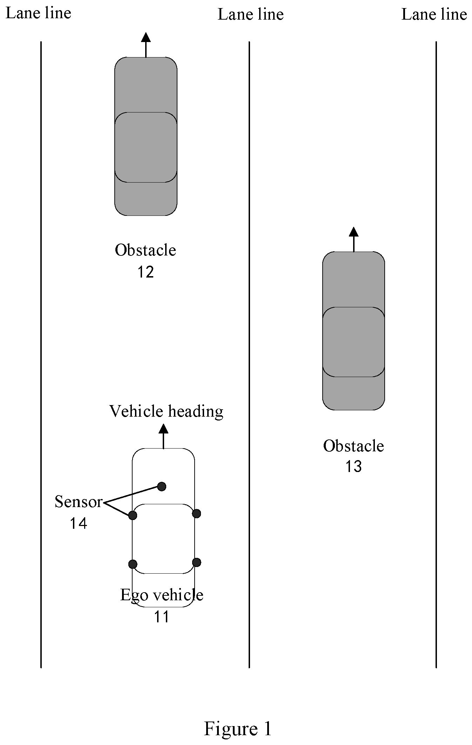

Figure 1 is an exemplary application scenario of a control method for a vehicle, provided by the present disclosure. As shown in Figure 1, during traveling of a vehicle (i.e., an ego vehicle) 11, there may be an obstacle surrounding the ego vehicle 11. The obstacle may include, for example, another vehicle (such as an obstacle 12, an obstacle 13 in the figure), a pedestrian, a cyclist, an animal, a traffic cone, a fence, etc. By using the control method for a vehicle of the embodiments of the present disclosure, a collision risk between the vehicle and the obstacle may be first assessed to determine the collision risk between the vehicle and the obstacle. For example, a surrounding obstacle may be perceived based on a sensor 14 installed on the ego vehicle 11, and the collision risk between the vehicle and the obstacle may be determined based on a perception result. In response to the collision risk indicating that a collision risk exists between the ego vehicle 11 and the obstacle at a future time, a reachable set in a speed-travel distance (or velocity-travel distance) space may be determined; distribution information of travel distance and speed of the vehicle at at least one future time may be determined; then, a triggering state of an AEB function (i.e., whether to issue a braking signal for the AEB function) may be determined based on the reachable set and the distribution information; and then, the vehicle may be controlled to travel based on the triggering state. For example, if the triggering state is "to be triggered", a braking signal is issued to perform AEB; and if the triggering state is "not to be triggered", the vehicle continues travelling according to a planned travel route. In the speed-travel distance space, the reachable set characterizes that an initial reachable region corresponding to each initial subset in the reachable set will evolve to a target reachable region corresponding to a target subset in the reachable set over a certain period of dynamic evolution. The target reachable region characterizes various possible speeds and travel distances during a process from the vehicle reaching a collision critical point to passing through a collision point. The distribution information of speed and travel distance of the vehicle at the future time characterizes a joint distribution of speed and travel distance of the vehicle at the future time. In case that the distribution of speed and travel distance of the vehicle at the future time is located within a reachable region corresponding to the reachable set, it indicates that a state of the vehicle (i.e., a speed and a travel distance) may evolve into a state interval where a collision with an obstacle occurs (i.e., the target reachable region corresponding to the target subset) over a certain period of dynamic evolution, if the vehicle travels according to the distribution information of speed and travel distance at the future time. Accordingly, by combining a relationship between the distribution information of speed and travel distance of the vehicle at the future time and the reachable set, the triggering state of the AEB function may be effectively determined. Compared to triggering the AEB function based on a simply calculation of TTC, the methods of the embodiments of the present disclosure comprehensively considers the reachable set in which speed and travel distance of the vehicle are capable of reaching a collision state before a collision, thereby effectively improving accuracy and effectiveness of triggering the AEB function and avoiding or reducing missed triggers and false triggers, thus enhancing the safety of the AEB function and improving user ride comfort, such that the AEB function may satisfy increasingly higher safety requirements and user requirements for ride comfort.

### Exemplary methods

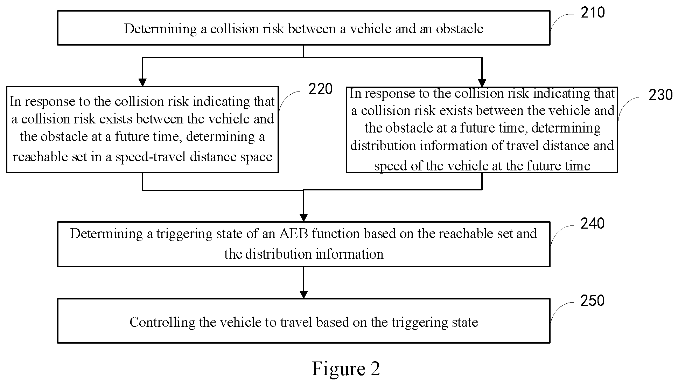

Figure 2 is a flow schematic diagram of a control method for a vehicle, provided by an exemplary embodiment of the present disclosure. The embodiment may be applied to an electronic device, a system on chip (SoC, or a system-level chip), or a server. The electronic device may include, for example, an in-vehicle computing platform (or an in-vehicle terminal). The SoC may be, for example, an intelligent driving chip. As shown in Figure 2, a method of the embodiments of the present disclosure may include the following steps.

At step 210, a collision risk between a vehicle and an obstacle is determined.

The collision risk is used for indicating whether a collision risk exists between the vehicle and the obstacle at a future time. The collision risk may include two states: a state where there is a collision risk between the vehicle and the obstacle at a future time and a state where there is no collision risk. The number of future times may be one or more. For example, a plurality of future times are determined at a certain time step, and then collision risks between the vehicle and the obstacle respectively corresponding to the plurality of future time are determined. Illustratively, the time step (or time interval) is 0.04 seconds (or another value), 75 future time within the next 3 seconds (or another duration) are determined, and then collision risks between the vehicle and the obstacle respectively corresponding to these 75 future times are determined. The collision risk between the vehicle and the obstacle is determined according to the collision risks respectively corresponding to the future time. For example, if there is a collision risk at any future time, it is determined that a collision risk exists between the vehicle and the obstacle at the future time.

In some alternative embodiments, the obstacle refers to an obstacle in a surrounding environment of the vehicle, which may include another vehicle, a pedestrian, a cyclist, an animal, a traffic cone, a fence, etc. The cyclist may further include a tricycle rider, a bike rider, a motorcyclist, an E-bike rider, etc. The specific type of the obstacle is not limited. A surrounding obstacle may be perceived by a sensor installed on the vehicle for environment perception, to obtain state information of the obstacle. For example, during traveling of the vehicle, obstacle state information (which may be referred to as current obstacle state information) may be determined through a perception algorithm model based on sensor data acquired by a sensor at a current time, and vehicle state information (which may be referred to as current vehicle state information) may be acquired based on a sensor related to an ego vehicle state, such as a positioning sensor, a speed sensor, an angular velocity sensor, etc., on the vehicle. Then, the collision risk between the vehicle and the obstacle is determined according to the current vehicle state information and the current obstacle state information. For example, the collision risk between the vehicle and the obstacle at a future time may be predicted based on the current vehicle state information and the current obstacle state information.

In some alternative embodiments, in a case where there are a plurality of obstacles, for each obstacle, a collision risk between the vehicle and the obstacle may be respectively determined. Then, an obstacle with a collision risk may be taken as a main obstacle (or a target obstacle), and a collision risk of the main obstacle may be issued to cause the AEB function to proceed to a braking signal assessment stage. The braking signal assessment stage is a stage in which whether a current time is a latest issuance time for a braking signal is assessed. If the current time is the latest issuance time, the braking signal is issued at the current time, and if the current time is not the latest issuance time, no braking signal is issued temporarily. The process of determining the collision risk between the vehicle and the obstacle may be referred to as a collision risk assessment stage of the AEB function.

In some alternative embodiments, the collision risk between the vehicle (the ego vehicle) and the obstacle at a future time may be determined based on state information of the vehicle at a current time (or referred to as current vehicle state information) and state information of the obstacle at the current time (or referred to as current obstacle state information).

In some alternative embodiments, a trajectory (which may be referred to as a first trajectory) of the vehicle at a future time may be predicted based on the current vehicle state information, and a trajectory (which may be referred to as a second trajectory) of the obstacle at the future time may be predicted based on the current obstacle state information. And then whether a collision risk exists between the vehicle and the obstacle at the future time may be determined based on the trajectory of the vehicle at the future time and the trajectory of the obstacle at the future time. For example, whether a collision risk exists between the vehicle and the obstacle at the future time may be determined based on an interference state between the trajectory of the vehicle at the future time and the trajectory of the obstacle at the future time. The interference state refers to whether an overlap exists between a region where the vehicle will be located and a region where the obstacle will be located at a future time, which is determined according to the trajectory of the vehicle at the future time, a size of the vehicle, the trajectory of the obstacle at the future time, and a size of the obstacle. If an overlap exists, it indicates that the vehicle and the obstacle will contact each other at the future time, that is, a collision will occur.

In some alternative embodiments, position probability distribution information (which may be referred to as first position probability distribution information) of the vehicle at a future time may be predicted based on the current vehicle state information, and position probability distribution information (which may be referred to as second position probability distribution information) of the obstacle at the future time may be predicted based on the current obstacle state information. The position probability distribution information characterizes a probability of the vehicle (and/or the obstacle) being at different positions within a certain region at the future time. The position probability distribution information follows a Gaussian distribution (i.e., a normal distribution). Since a position may include a lateral position and a longitudinal position, the position probability distribution information may be represented as a two-dimensional probability distribution ellipse of lateral position and longitudinal position. Then, the collision risk between the vehicle and the obstacle at the future time may be determined according to the first position probability distribution information and the second position probability distribution information.

In some alternative embodiments, the collision risk between the vehicle and the obstacle may be determined according to an overlap ratio between a two-dimensional probability distribution ellipse (which may be referred to as a first probability distribution ellipse) corresponding to the first position probability distribution information and a two-dimensional probability distribution ellipse (which may be referred to as a second probability distribution ellipse) corresponding to the second position probability distribution information. For example, at a certain future time, an area of the first probability distribution ellipse corresponding to the first position probability distribution information is *S*₀, an area of the second probability distribution ellipse corresponding to the second position probability distribution information is *S*₁, an area of an overlap region between the first and second probability distribution ellipses is *S*₂, and the overlap ratio of the position distributions of the vehicle and the obstacle at the future time may be represented as follows: $Overlap ratio = \frac{{S}_{2}}{{S}_{0}} ∗ \frac{{S}_{2}}{{S}_{1}}$ Formula (1)

In the Formula (1), the Overlap ratio is a value ranging from 0 to 1. If the Overlap ratio is greater than an overlap ratio threshold, it is determined that there is a collision risk between the vehicle and the obstacle at the future time. If the Overlap ratio is less than or equal to the overlap ratio threshold, it may be determined that there is no collision risk between the vehicle and the obstacle at the future time. Then, the collision risk between the vehicle and the obstacle may be determined in combination with a collision risk situation between the vehicle and the obstacle at each future time.

In some alternative embodiments, collision indication vector distribution information of the vehicle and the obstacle corresponding to a future time may be determined according to the first position probability distribution information and the second position probability distribution information, and then the collision risk between the vehicle and the obstacle may be determined based on the collision indication vector distribution information. A collision indication vector refers to a vector pointing from a position of the ego vehicle (i.e. the vehicle) (such as a geometric center point or a rear axle center of the ego vehicle) to a position of the obstacle (such as a geometric center point of the obstacle), and the collision indication vector characterizes a position of the obstacle with respect to the ego vehicle. Since the predicted position of the ego vehicle and the predicted position of the obstacle at a future time follow a probability distribution, the position of the obstacle with respect to the ego vehicle has a certain probability distribution property, the collision indication vector is a random vector, and the collision indication vector distribution information represents probability distribution information of the random vector. That is, for each future time, collision indication vector distribution information corresponding to the future time refers to probability distribution information of a relative position vector determined based on first position probability distribution information and second position probability distribution information corresponding to the future time, and the relative position vector is a difference between a second position and a first position. That is, the collision indication vector distribution information characterizes a spatial position distribution relationship of the obstacle with respect to the vehicle at the future time. The collision indication vector distribution information may include a collision indication vector mean and variance, which follow a certain probability distribution, such as a normal distribution (i.e., a Gaussian distribution). The collision indication vector mean and variance are determined based on the first position probability distribution information and the second position probability distribution information according to an operation rule of a probability distribution. Under an independence assumption, the operation rule may conform to a combination relationship of the Gaussian distribution, which will not be further elaborated.

Only some exemplary manners for determining the collision risk are given above, and practical applications are not limited to the above exemplary manners.

At step 220, in response to the collision risk indicating that a collision risk exists between the vehicle and the obstacle at a future time, a reachable set in a speed-travel distance space is determined.

If the collision risk indicates that a collision risk exists between the vehicle and the obstacle at the future time, i.e., a collision risk has been issued in the collision risk assessment stage, that is, the vehicle and the obstacle may collide at a certain future time, a braking signal assessment stage begins.

The reachable set is used for describing a set of all states that the vehicle may reach under a given initial state and a control constraint. A backward reachable set reversely derives, from a target state, which initial states can reach the target state under the control constraint.

In some optional embodiments, in a situation where it is determined that a collision risk exists between the vehicle and the obstacle at a future time, a state of the vehicle at a collision time is determined as a target state, and initial states at a plurality of time before the collision time are reversely derived; then, the target state of the vehicle at the collision time and the initial states at the plurality of time before the collision time constitute a backward reachable set.

In some alternative embodiments, a speed-travel distance space may be determined by selecting a speed of the vehicle and a travel distance that the vehicle travels to a collision point as physical quantities to describe a vehicle state and establishing a coordinate system with the speed (or referred to as a speed variable) of the vehicle and the travel distance (or referred to as a travel distance variable) that the vehicle travels to the collision point as coordinate axes. For example, a speed-travel distance coordinate system is established with the travel distance that the vehicle travels to the collision point as a horizontal axis and the speed of the vehicle as a vertical axis. The origin of the coordinate system is a collision critical point, which is a point where the speed of the vehicle is 0 meters per second and the travel distance that the vehicle travels to the collision point is 0 meters. That is, assuming that a point where the vehicle reaches the collision critical point (i.e., a point where the speed is exactly 0 meters per second upon first contact with the collision point) is the origin, a travel distance that the vehicle travels to the collision point before reaching the collision point has a negative value, and a travel distance that the vehicle travels to the collision point during and after the vehicle passing through the collision point has a positive value. The collision point is an intersection point of trajectories of the vehicle and the obstacle at a future time. For example, if a predicted trajectory of the vehicle at future time intersects with a predicted trajectory of the obstacle at future time T_{C}, an intersection point of the trajectories of the vehicle and the obstacle at the time T_{C} is a collision point, and the time T_{C} is referred to as a collision time corresponding to the collision point. The trajectory of the vehicle at the future time may be predicted based on a kinematic model corresponding to the vehicle. The trajectory of the obstacle at the future time may be predicted based on a kinematic model corresponding to the obstacle. The kinematic model corresponding to the vehicle may be determined according to motion characteristics of the vehicle. For example, the kinematic model corresponding to the vehicle may be a constant velocity motion model, a constant acceleration motion model, etc., and there is no specific limitation. The kinematic model corresponding to the obstacle may be determined according to motion characteristics of the obstacle. For example, the kinematic model corresponding to the obstacle may be a constant velocity motion model, a constant acceleration motion model, etc. The travel distance (or referred to as a distance) that the vehicle travels to the collision point refers to a length of a travel trajectory of the vehicle to the collision point. The term "collision point" may refer to a collision position.

The reachable set may include one or more reachable subsets (or referred to as reachable regions). Each reachable subset may represent a subset of the reachable set. In some alternative embodiments, in a situation where it is determined that a collision risk exists between the vehicle and the obstacle at a future time, a target reachable region of the target state of the vehicle in the speed-travel distance space at the collision time (i.e. the time T_{C}) is determined; a target subset in the reachable set is determined based on the target reachable region; initial reachable regions at a plurality of time before the time T_{C} are reversely derived based on the target reachable region; and initial subsets in the reachable set at the plurality of time are determined based on the initial reachable regions. Since each initial subset in the reachable set is reversely derived based on the target subset in the reachable set, and the target subset in the reachable set is determined based on the target reachable region of the target state of the vehicle in the speed-travel distance space at the time T_{C}, an initial reachable region corresponding to each initial subset in the reachable set may evolve to the target reachable region over a certain period of dynamic evolution. The target reachable region includes state points consisting of various possible speeds and travel distances during a process from the vehicle reaching the collision critical point to passing through the collision point, such as state points consisting of various speeds and travel distances including speeds ranging from 0 meters per second to Vₘₐₓ meters per second and travel distances ranging from 0 meters to dₘₐₓ meters.

In some alternative embodiments, the number (which may be referred to as a first number) of reachable subsets included in the reachable set may be determined according to a backward time step and a preset duration. For example, if the preset duration is 2 seconds and the backward time step is 0.04 seconds, the number of reachable subsets is 2/0.04=50.

In some alternative embodiments, the first number may be determined based on the collision time corresponding to the collision point, a brake response time, and the backward time step. For example, the collision time corresponding to the collision point is time T_{c}, the brake response time is tᵣ, and a time when the brake response time ends is represented as a time Tᵣ. Starting from the time T_{c}, backward derivation is performed according to the backward time step until a backward time is before a time Tᵣ₊₁ or the backward time coincides with the time Tᵣ₊₁, and then, the first number may be determined based on the number of backward time before the time Tᵣ₊₁ or the number of backward time steps. For example, starting from the time T_{c}, backward derivation is performed according to a backward time step of 0.04 seconds to obtain a sequence of backward times: a time T_{c-1}, a time T_{c-2}, ..., a time T_{c-3}, wherein h is a positive integer, and the time T_{c-h} is before the time Tᵣ₊₁ or the time T_{c-h} coincides with the time Tᵣ₊₁, and the time T_{c-h+1} is not located after the time Tᵣ₊₁; then, the first number may be h or h+1. The time Tᵣ₊₁ represents a next time of the time Tᵣ, which is a time after the time Tᵣ and spaced apart from the time Tᵣ by one time step.

In some alternative embodiments, the first number may be a preset value, and the backward time step is determined according to the first number and a duration between the time T_{c} and the time Tᵣ₊₁. The first number and the backward time step are not specifically limited.

At step 230, in response to the collision risk indicating that a collision risk exists between the vehicle and the obstacle at a future time, distribution information of travel distance and speed of the vehicle at the future time is determined.

The number of future times may be one or more. In the case that there are a plurality of future times, in response to the collision risk indicating that a collision risk exists between the vehicle and the obstacle at each future time, distribution information of travel distance and speed of the vehicle at the future time is determined. Similarly, at 220 described above, for each future time, a reachable set in the speed-travel distance space is determined.

In some alternative embodiments, the number of future times may be determined according to a time step and a future duration to be predicted. Distribution information of travel distance and speed of the vehicle at a future time refers to distribution information of a speed of the vehicle and a travel distance that the vehicle travels to the collision point at the future time.

In some alternative embodiments, distribution information of travel distance and speed of the vehicle at the future time may be predicted based on current vehicle state information of the vehicle. For example, the current vehicle state information of the vehicle may be transformed into a coordinate system corresponding to a speed-travel distance space, and the distribution information of travel distance and speed of the vehicle at the future time may be predicted in the speed-travel distance space. Similarly, for the plurality of future times, distribution information of travel distance and speed of the vehicle at each future time may be predicted based on current vehicle state information of the vehicle.

In some alternative embodiments, distribution information of travel distance and speed of the vehicle at a future time follows a probability distribution, such as a Gaussian distribution (i.e., a normal distribution), that is, the distribution information of travel distance and speed may be represented as a two-dimensional probability distribution ellipse of travel distance and speed.

It should be noted that the order that the steps 220 and 230 are performed is not limited.

At step 240, a triggering state of an AEB function is determined based on the reachable set and the distribution information.

The triggering state of the AEB function may include two states: "to be triggered" and "not to be triggered". If the triggering state is "to be triggered", it indicates that a braking signal for emergency braking needs to be issued. If the triggering state is "not to be triggered", there is no need to issue a braking signal for emergency braking temporarily. The reachable set characterizes that an initial reachable region corresponding to each initial subset in the reachable set will evolve to a target reachable region (i.e. a state interval where a collision with an obstacle occurs) corresponding to a target subset in the reachable set over a certain period of dynamic evolution. The distribution information characterizes a joint distribution of speed and travel distance of the vehicle at a future time. If the joint distribution of speed and travel distance of the vehicle at the future time falls within a reachable region corresponding to the reachable set with a high probability, it indicates that a state of the vehicle will reach the target reachable region where a collision occurs over a certain period of dynamic evolution, that is, there is a high probability that the vehicle will collide with the obstacle. Therefore, the triggering state of the AEB function may be determined based on the reachable set and the distribution information of travel distance and speed of the vehicle at each future time.

In some alternative embodiments, based on integral results of distribution information of travel distance and speed of the vehicle at each future time within reachable regions corresponding to one or more reachable subsets of the reachable set, a first collision risk value (which may be referred to as a first collision risk probability) at which the vehicle will collide with the obstacle according to the distribution information of speed and travel distance of the vehicle at the future time may be determined. Then, based on a magnitude relationship between the first collision risk value and a first collision risk threshold, it is determined whether the vehicle will collide with the obstacle if emergency braking is initiated at the future time. For example, if the future time is a time Tⱼ, and an integral result of distribution information of travel distance and speed of the vehicle at the time Tⱼ within a reachable region corresponding to a certain reachable subset Sᵢ in the reachable set is greater than the first collision risk threshold, it indicates that the vehicle will collide with the obstacle over a certain period of evolution in the event of traveling according to the distribution information of speed and travel distance at the time Tⱼ. Therefore, emergency braking needs to be initiated no later than the time Tⱼ to avoid collision. Then, based on the determined time Tⱼ when the vehicle will collide with the obstacle, it is determined whether a current time is a latest issuance time for issuing a braking signal. For example, since there is a certain response time for a brake, which is a duration between the brake receiving the braking signal and initiating braking, the vehicle travels at a current speed constantly during this response time. The latest issuance time may be determined based on a duration between the time Tⱼ and the brake response time of the vehicle. The target subset in the reachable set is represented as S₀, the reachable set includes a first number of reachable subsets, and a reachable subset Sᵢ represents an i-th initial subset in reverse chronological order from the target subset S₀ among the first number of reachable subsets. For example, according to the reverse chronological order, S₀ is the target subset corresponding to the time T_{C} corresponding to the collision point, an initial subset corresponding to a time T_{C-1} is represented as S₁, an initial subset corresponding to a time T_{C-2} is represented as S₂, and so on. If the first number is m+1, an initial subset corresponding to a time T_{C-m} is represented as Sₘ, and a sequence of initial subsets in reverse chronological order is represented as S₁, S₂, ..., Sₘ. Taking the sequence of initial subsets in reverse chronological order in the reachable set as an example, if an integral result of distribution information of travel distance and speed of the vehicle at the time Tⱼ within a reachable region corresponding to an initial subset Sᵢ is greater than the first collision risk threshold, it indicates that a probability distribution of travel distance and speed of the vehicle at the time Tⱼ falls within the reachable region corresponding to the initial subset Sᵢ with a high probability. If the vehicle travels according to the distribution information of speed and travel distance at the time Tⱼ, there is a high probability that a probability distribution of travel distance and speed of the vehicle at the time T_{C} falls within the target subset S₀over a certain period of evolution, that is, a collision occurs. Furthermore, taking the brake response time into account, the latest issuance time to avoid a collision may be determined. For example, a braking signal needs to be issued before a time having a time interval from the time Tⱼ greater than the brake response time (such as a time Tⱼ₋ₜ, where t is a positive integer) to avoid collision. Based on a relationship between the time Tⱼ₋ₜ and a current time, it may be determined whether the current time is the latest issuance time.

In some alternative embodiments, a first number of initial subsets included in the reachable set is 1, or one initial subset is determined from a plurality of initial subsets included in the reachable set, and the number of future times is 1. In this case, if a brake response time is tᵣ, a time when the brake response ends is a time Tᵣ, and a current time is a time T₀, distribution information of travel distance and speed of the vehicle at a time Tᵣ₊₁ may be predicted. This initial subset is an initial subset corresponding to the time Tᵣ₊₁. For example, if a collision time corresponding to a collision point (i.e. a time corresponding to the target subset) is a time T_{c}, and the time T_{c} is a 0-th time in reverse chronological order during a backward derivation process, an initial subset generated through backward derivation from the time T_{c} is an initial subset corresponding to a time T_{c-(r+1)}, and the reverse time T_{c-(r+1)} corresponds to a forward time Tᵣ₊₁. Then, the triggering state of the AEB function may be determined based on distribution information of travel distance and speed of the vehicle at the time Tᵣ₊₁, as well as the initial subset corresponding to the time T_{c-(r+1)}. If an integral value of the distribution information of travel distance and speed at Tᵣ₊₁ within an initial reachable region (i.e. a reachable region corresponding to the initial subset) corresponding to the time T_{c-(r+1)} is greater than the first collision risk threshold, the triggering state of the AEB function is determined as "to be triggered", that is, the current time is the latest issuance time, and a braking signal needs to be issued.

At step 250, the vehicle is controlled to travel based on the triggering state.

After determining the triggering state of the AEB function, a braking signal for emergency braking is issued if the triggering state is "to be triggered", and then the vehicle is controlled to travel according to the braking signal, that is, the braking signal is issued to a brake, and the brake performs braking with a maximum deceleration according to the braking signal, to enable the vehicle to stop at a certain braking distance from the obstacle to avoid collision. If the triggering state is "not to be triggered", the vehicle may be controlled to continue travelling according to a planned travel route.

In the control method for a vehicle provided by the embodiment, in the speed-travel distance space, the reachable set characterizes that an initial reachable region corresponding to each initial subset in the reachable set will evolve to a target reachable region corresponding to a target subset in the reachable set over a certain period of dynamic evolution, the target reachable region characterizes various possible speeds and travel distances during a process from the vehicle reaching a collision critical point to passing through a collision point, and distribution information of speed and travel distance of the vehicle at a future time characterizes a joint distribution of speed and travel distance of the vehicle at the future time. If the distribution of speed and travel distance of the vehicle at the future time is located within a reachable region corresponding to the reachable set, it indicates that a state of the vehicle (i.e., a speed and a travel distance) may evolve into a state interval where a collision with an obstacle occurs (i.e., the target reachable region corresponding to the target subset) over a certain period of dynamic evolution, if the vehicle travels according to the distribution information of speed and travel distance at the future time. Based on this, by combining a relationship between the distribution information of speed and travel distance of the vehicle at the future time and the reachable set, the triggering state of the AEB function may be effectively determined. Compared to triggering the AEB function based on a simply calculation of TTC, the methods of the embodiments of the present disclosure comprehensively considers the reachable set in which speed and travel distance of the vehicle are capable of reaching a collision state before a collision, thereby effectively improving accuracy and effectiveness of triggering the AEB function and avoiding or reducing missed triggers and false triggers, thus enhancing the safety of the AEB function and improving user ride comfort, such that the AEB function may satisfy increasingly higher safety requirements and user requirements for ride comfort.

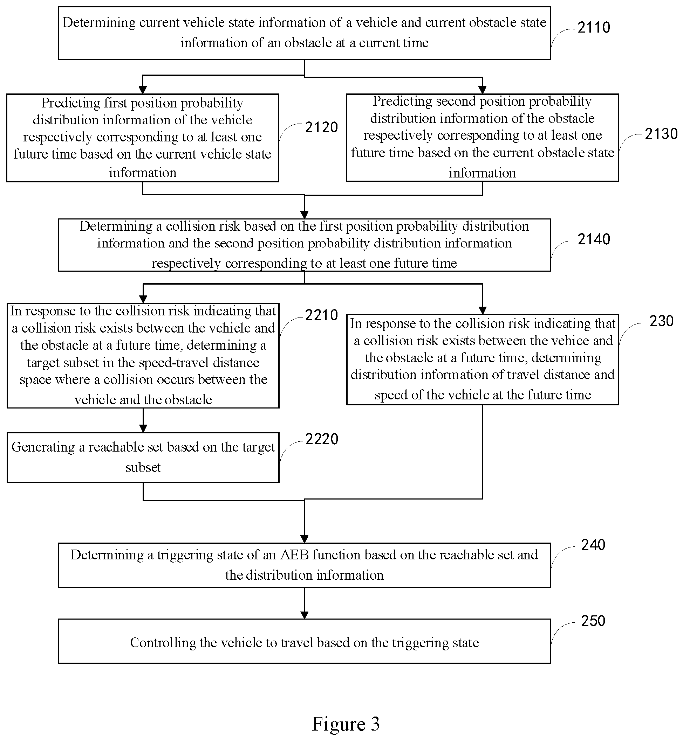

Figure 3 is a flow schematic diagram of a control method for a vehicle provided by another exemplary embodiment of the present disclosure.

In some alternative embodiments, on the basis of any of the above embodiments, as shown in Figure 3, determining a collision risk between a vehicle and an obstacle at step 210 in Figure 2 may include steps 2110~2140.

At step 2110, current vehicle state information of the vehicle and current obstacle state information of the obstacle at a current time are determined.

In some alternative embodiments, the current vehicle state information may include kinematic information of the vehicle at the current time, which may include a position, a speed, an acceleration, a yaw angle, a yaw rate, etc., of the vehicle. Alternatively, the current vehicle state information may be state information of the vehicle in a global coordinate system. The global coordinate system may be, for example, the world coordinate system, the vehicle's own coordinate system at an initial position, etc., and there is no specific limitation thereon.

In some alternative embodiments, the current obstacle state information may include kinematic information, size information, type information, etc., of the obstacle at the current time. The kinematic information of the obstacle may include a position, a speed, an acceleration, a yaw angle, a yaw rate, etc., of the obstacle in a local coordinate system of the vehicle. The size information of the obstacle may include a length, a width, etc., of the obstacle. The type information of the obstacle refers to a type of the obstacle, such as another vehicle, a pedestrian, a cyclist, an animal, a traffic cone, a fence, etc., as described above. The local coordinate system of the vehicle refers to a coordinate system with a preset position of the vehicle as the origin. For example, the local coordinate system may be the vehicle's own coordinate system at the current time.

For the manners for obtaining the current vehicle state information and the current obstacle state information, reference may be made to the foregoing content, which will not be further elaborated here.

At step 2120, first position probability distribution information of the vehicle corresponding to at least one future time is predicted based on the current vehicle state information.

The first position probability distribution information characterizes a probability that the vehicle may be at different positions within a certain region at a future time. The first position probability distribution information follows a certain probability distribution, such as a Gaussian distribution (i.e., a normal distribution). Reference is made to the foregoing content for details.

At step 2130, second position probability distribution information of the obstacle respectively corresponding to the at least one future time is predicted based on the current obstacle state information.

For the second position probability distribution information, reference may be made to the foregoing content, which will not be further elaborated here.

It should be noted that the order that the steps 2120 and 2130 are performed is not limited.

At step 2140, the collision risk is determined based on first position probability distribution information and second position probability distribution information respectively corresponding to the at least one future time.

In some alternative embodiments, the collision risk between the vehicle and the obstacle may be determined based on an overlap ratio between a first probability distribution ellipse corresponding to the first position probability distribution information and a second probability distribution ellipse corresponding to the second position probability distribution information. Reference is made to the foregoing content for details, which will not be further elaborated here.

In some alternative embodiments, collision indication vector distribution information of the vehicle and the obstacle corresponding to a future time may be determined according to the first position probability distribution information and the second position probability distribution information, and then the collision risk between the vehicle and the obstacle may be determined based on the collision indication vector distribution information.

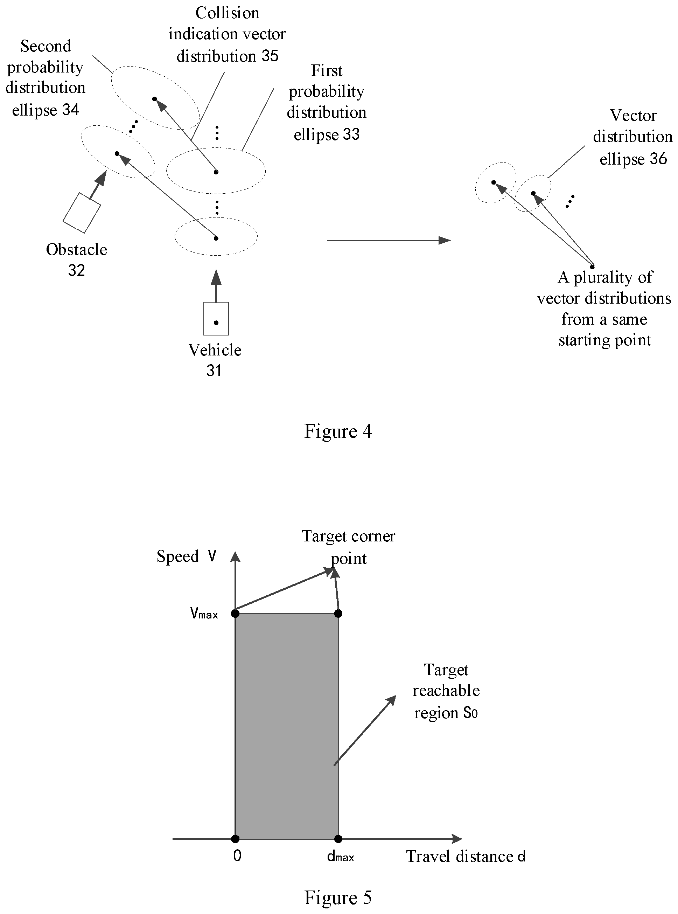

Illustratively, Figure 4 is a schematic diagram of collision indication vector distribution information provided by an exemplary embodiment of the present disclosure. As shown in Figure 4, position probability distribution information of a vehicle (i.e. an ego vehicle) 31 and an obstacle 32 at each future time are respectively represented as a first probability distribution ellipse 33 and a second probability distribution ellipse 34 in the figure. Collision indication vector distribution information at each future time corresponds to a collision indication vector distribution 35 in the figure, and then, the collision indication vector distributions 35 respectively corresponding to future times may be represented as a plurality of vector distributions from a same starting point. Each future time corresponds to one vector distribution. An elliptical region of the vector distribution (such as a vector distribution ellipse 36 in the figure) represents a probability distribution ellipse of a relative spatial position between the obstacle 32 and the ego vehicle 31 at a respective future time. A second collision risk probability (i.e., a second collision risk value) at each future time may be determined according to a relative distance relationship between the probability distribution ellipse of the relative spatial position of the obstacle 32 at each future time and the ego vehicle 31. Then, a collision risk between the vehicle 31 and the obstacle 32 is determined according to the second collision risk value and the second collision risk threshold. Collision indication vector distribution information of the vehicle 31 and the obstacle 32 corresponding to a future time characterizes a spatial position distribution relationship of the obstacle 32 relative to the vehicle 31 at the future time, and the collision indication vector distribution information is determined based on the predicted first probability distribution ellipse 33 of the vehicle at the future time and the predicted second probability distribution ellipse 34 of the obstacle at the future time. The position probability distribution information of the vehicle 31 and the obstacle 32 at the future time is predicted, rather than a Boolean variable, which helps to improve tolerance of a trajectory prediction result to noise, reduce adverse effects caused by sensor data noise, and enable the collision indication vector distribution information to accurately describe a spatial position distribution relationship of the obstacle 32 relative to the ego vehicle 31 at a future time. Therefore, the accuracy of collision risk may be increased.

In the embodiments of the present disclosure, by predicting first position probability distribution information of the vehicle at a future time and second position probability distribution information of the obstacle at the future time, and then determining a collision risk between the vehicle and the obstacle based on the first position probability distribution information and the second position probability distribution information, a result used for determining the collision risk can be a probability value instead of a Boolean variable, which facilitates improving tolerance of a trajectory prediction result to noise, thereby reducing adverse effects of sensor data noise on the collision risk, and improving robustness, accuracy and effectiveness of the collision risk.

In some alternative embodiments, based on the embodiment illustrated above in Figure 2, as shown in Figure 3, determining a reachable set in a speed-travel distance space in response to the collision risk indicating that a collision risk exists between the vehicle and the obstacle at a future time at step 220 may include steps 2210 and 2220.

At step 2210, in response to the collision risk indicating that a collision risk exists between the vehicle and the obstacle at a future time, a target subset in the speed-travel distance space where the vehicle collides with the obstacle is determined.

For the target subset in the speed-travel distance space where the vehicle collides with the obstacle, reference may be made to the foregoing content.

In some alternative embodiments, the target subset may be determined based on a speed interval and a travel distance interval in which the vehicle may collide with the obstacle at a collision time (i.e. a time T_{C}). Illustratively, Figure 5 is a schematic diagram of a target reachable region provided by an exemplary embodiment of the present disclosure. As shown in Figure 5, a coordinate system for a speed-travel distance space is established with a vehicle speed of 0 meters per second and a travel distance of 0 meters that the vehicle travels to a collision point as the coordinate origin, that is, a vertical axis is the speed and a horizontal axis is the travel distance. If the coordinate origin (0, 0) is a corner point of a target reachable region, a speed interval is represented as 0~Vₘₐₓ meters per second, and a travel distance interval is represented as 0~dₘₐₓ meters, (0, Vₘₐₓ), (dₘₐₓ, 0), and (dₘₐₓ, Vₘₐₓ) are the other three corner points of the target reachable region. A rectangular region formed by these four corner points is the target reachable region, and the target reachable region constitutes a target subset, that is, any speed value and any travel distance value within the rectangular region constitute a state point, and a set of state points within the rectangular region is referred to as the target subset.

In some alternative embodiments, an upper bound value dₘₐₓ of the travel distance interval may be determined based on a length of the vehicle and a length of the obstacle. For example, dₘₐₓ may be a sum of the length of the vehicle and the length of the obstacle, or dₘₐₓ may be a sum of the length of the vehicle, the length of the obstacle, and a preset threshold. The preset threshold may be set according to actual needs.

In some alternative embodiments, a lower bound value of the speed interval is not limited to 0 meters per second, and a lower bound value of the travel distance interval is not limited to 0 meters; and these may be specifically set according to actual situations such as a vehicle perception function, brake performance, etc.

At step 2220, a reachable set is generated based on the target subset.

In some alternative embodiments, since the target subset is determined based on the target reachable region of the target state of the vehicle in the speed-travel distance space at the collision time T_{C}, in order to ensure that an initial reachable region of the reachable set can evolve to the target reachable region through dynamic evolution, one or more initial subsets may be generated by performing backward derivation on the target subset so as to obtain the reachable set. For example, one or more initial subsets may be obtained by performing backward derivation according to a pre-configured backward state transition equation (or referred to as a backward state transition rule) based on the target subset. The backward state transition equation may be obtained based on transformation of a kinematic model. The kinematic model may include, for example, a constant acceleration motion model, a variable acceleration motion model (i.e., an acceleration motion model with varying acceleration), etc. Alternatively, in a situation where the reachable set is used to determine whether to issue a braking signal for emergency braking, the reachable set is a reachable set in an emergency braking state, and a backward state transition equation is determined using a constant acceleration motion model. A speed change rate (i.e., an acceleration, or referred to as a deceleration) is a maximum deceleration of the vehicle, which serves as a control variable for a backward derivation process. A backward time step may be set according to actual needs, and there is no specific limitation.

In the embodiments of the present disclosure, a reachable set is generated based on a target subset where a vehicle collides with an obstacle in a speed-travel distance space, such that a reachable region corresponding to the generated reachable set can evolve to a target reachable region corresponding to the target subset where a collision with the obstacle occurs after a certain period of dynamic evolution, thereby providing an accurate and effective reachable set for determining a triggering state of an AEB function. If a distribution of speed and travel distance of the vehicle at future time is likely to fall within the reachable set, it indicates that distribution information of travel distance and speed of the vehicle at the future time is an initial state, and a state of the vehicle will evolve to the target reachable region if the vehicle travels under a respective control constraint, that is, the vehicle will collide with the obstacle. Thereby it can be effectively determined whether a current time is a latest issuance time for a braking signal, ensuring accuracy of timing for issuing the braking signal.

In some alternative embodiments, generating a reachable set based on the target subset at step 2220 may include:

determining a target boundary point set based on the target subset; determining a backward state transition rule corresponding to a preset motion model; generating a first number of initial boundary point sets based on the target boundary point set and the backward state transition rule; and determining the reachable set based on the initial boundary point sets.

The target boundary point set represents a set of boundary points of the target subset. For example, the target boundary point set may include a set of corner points of the target subset. The set of corner points of the target subset may be a set of corner points of the target reachable region corresponding to the target subset. The preset motion model may be determined according to motion conditions of the vehicle during emergency braking. For example, if the vehicle performs braking at a maximum deceleration during emergency braking, the preset motion model may be a constant deceleration motion model for the maximum deceleration. The backward state transition rule is a backward derivation rule derived based on a forward derivation rule (or referred to as a forward state transition rule) of the preset motion model. For example, the forward derivation rule is to derive a state of the vehicle at a time t+i (i=1, 2, ...) from a state of the vehicle at a time t, while the backward state transition rule is to derive the state of the vehicle at the time t from the state of the vehicle at the time t+i. Each boundary point in the target boundary point set of the target subset corresponds to a state of the vehicle, that is, each boundary point is a state point. The state of the vehicle may include a speed of the vehicle and a travel distance that the vehicle travels to a collision point. For each boundary point (which may be referred to as a target boundary point) in the target boundary point set, a backward boundary point (or referred to as an initial boundary point) of the target boundary point at any time before a collision time corresponding to the collision point may be obtained through backward derivation. Backward boundary points of the target boundary points at any time constitute an initial boundary point set corresponding to the time. A region enclosed by the initial boundary point set is an initial reachable region corresponding to the time, and a set of all states within the initial reachable region is an initial subset. Initial subsets respectively corresponding to times constitute the reachable set, or initial subsets respectively corresponding to the times and the target subset constitute the reachable set.

In some alternative embodiments, as described above, a corner point of the target subset may be a corner point of the target reachable region corresponding to the target subset. The target boundary point set of the target subset may be determined based on a speed interval and a travel distance interval that are preset. The target boundary point set is illustrated as the four corner points (referred to as the target corner points) of the target reachable region shown in Figure 5, which will not be further elaborated.

In some alternative embodiments, a preset motion model is a constant acceleration motion model, and a forward derivation rule (i.e., a forward state transition rule) may be represented as follows: ${d}_{t + 1} = {d}_{t} + {v}_{t} ΔT + \frac{1}{2} {a}_{t} {ΔT}^{2}$ Formula (1) ${v}_{t + 1} = {v}_{t} + {a}_{t} ΔT$ Formula (3)

In Formulas (2) and (3), dₜ₊₁ represents a travel distance (or referred to as a distance) that the vehicle travels to a collision point corresponding to a time t+1, dt represents a travel distance that the vehicle travels to the collision point corresponding to a time t, ΔT represents a time interval between the time t and the time t+1, vₜ₊₁ represents a speed of the vehicle at the time t+1, vt represents a speed of the vehicle at the time t, and aₜ represents an acceleration (i.e., an acceleration corresponding to the time t), which is a maximum deceleration of a brake, for example, at is -10m/s² (meters per second squared) or another value.

Based on the forward state transition rule described above, determining a backward state transition rule may be represented as follows: ${v}_{t} = {v}_{t + 1} - {a}_{t} ΔT$ Formula (4) ${d}_{t} = {d}_{t + 1} - {v}_{t} ΔT - \frac{1}{2} {a}_{t} {ΔT}^{2} = {d}_{t + 1} - \left({v}_{t + 1}-{a}_{t}ΔT\right) ΔT - \frac{1}{2} {a}_{t} {ΔT}^{2}$ Formula (5)

The meaning of each symbol in Formulas (4) and (5) is consistent with that in Formulas (2) and (3).

In some alternative embodiments, the backward state transition rule may be to obtain initial states at one or more times before a collision time by respectively performing backward derivation from a target state at the collision time so as to obtain the reachable set. For example, according to a time interval (corresponding to ΔT described above) between a time T_{C-1} (corresponding to the time t described above) and a time T_{C} (corresponding to the time t+1 described above), an initial state corresponding to the time T_{C-1} is obtained by performing backward derivation according to the backward state transition rule described above; according to a time interval (corresponding to ΔT described above) between a time T_{C-2} (corresponding to the time t described above) and the time T_{C} (corresponding to the time t+1 described above), an initial state corresponding to the time T_{C-2} is obtained by performing backward derivation according to the backward state transition rule described above; and so on, therefore initial subsets at these times are obtained, and then the reachable set is determined based on the initial subsets at these times. It can be understood that this embodiment is applicable to backward derivation for constant acceleration motion.

In some alternative embodiments, a backward state transition rule may be to obtain initial states at one or more times before a collision time by sequentially performing backward recursion according to a backward time step starting from a target state at the collision time, so as to obtain the reachable set. In this case, ΔT in Formulas (4) and (5) described above may represent the backward time step. First, the time T_{C} may be taken as the time t+1 in the above formulas, the time T_{C-1} may be taken as the time t, and an initial state corresponding to the time T_{C-1} may be obtained by performing backward derivation according to the above formulas; subsequently, the time T_{C-1} is taken as the time t+1 described above, the time T_{C-2} is taken as the time t described above, and an initial state corresponding to the time T_{C-2} is obtained by performing backward derivation according to the above formulas; and so on, initial subsets at these times are obtained through backward derivation, and then the reachable set is determined based on the initial subsets at these times. It can be understood that this embodiment is applicable to backward derivation for constant acceleration motion and variable acceleration motion.

Illustratively, ΔT is 0.04 seconds, and a total duration for backward derivation is 2 seconds; four respective backward corner points (i.e., initial corner points) of four target corner points of a target subset at each time are obtained by performing backward derivation based on the four target corner points and Formulas (4) and (5) described above; and an initial subset corresponding to each time may be obtained based on four backward corner points at the time, and initial subsets respectively corresponding to 50 times in total may be obtained, that is, the reachable set may include 50 reachable subsets (including 50 initial subsets) or 51 reachable subsets (including 50 initial subsets and a target subset). In practical applications, ΔT and a total duration for backward derivation may be set according to actual needs. For example, the total duration for backward derivation may be set according to a time interval between a collision time corresponding to a collision point and a current time, or may be set according to the time interval between the collision time and the current time, as well as a brake response time. Reference may be made to the foregoing content, and the values are not limited to those in the above examples.

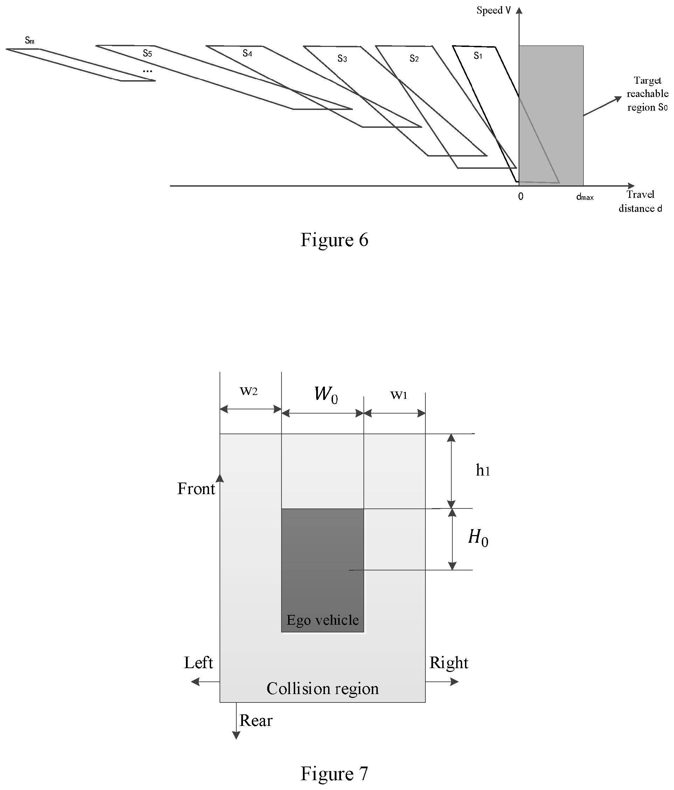

In some alternative embodiments, Figure 6 is a schematic diagram of a reachable set provided by an exemplary embodiment of the present disclosure. As shown in Figure 6, in a speed-travel distance (V-d) space, m initial boundary point sets are obtained by performing backward recursion based on four target corner points (i.e., a target boundary point set) of a target reachable region S₀ corresponding to a target subset, to form m initial reachable regions each having a quadrilateral (trapezoidal) region, such as S₁, S₂, ..., Sₘ in the figure. A quadrilateral region of each initial reachable region is a region where an upper side is parallel to a lower side, and two lateral sides of the quadrilateral may or may not be parallel. Each initial reachable region Sᵢ (i=1, 2, ..., m) forms a respective initial subset. For a state point consisting of any speed and travel distance in any initial reachable region Sᵢ, it will evolve into the target reachable region S₀ over a certain period of dynamic evolution, if a vehicle travels under a corresponding control constraint according to the state point, that is, the vehicle will collide with an obstacle.

In the embodiments of the present disclosure, a reachable set before a collision point is generated by performing backward derivation on an initial boundary point set of a target subset based on a backward state transition rule corresponding to a preset motion model, such that a state point in the reachable set will evolve into a target reachable region corresponding to the target subset after a certain period of dynamic evolution, thereby ensuring accuracy and effectiveness of the reachable set.

In some alternative embodiments, determining a target subset in the speed-travel distance space where the vehicle collides with the obstacle at step 2210 may include:

determining a collision region type based on current vehicle state information of the vehicle and current obstacle state information of the obstacle; determining a corresponding speed interval and travel distance interval based on the collision region type; determining a target boundary point set of the target subset based on the speed interval and the travel distance interval; and determining the target subset based on the target boundary point set.

For the current vehicle state information and the current obstacle state information, reference may be made to the foregoing content, which will not be further elaborated here. A collision region is a region that includes a certain range surrounding a position of an ego vehicle (i.e., the vehicle). If a position of the obstacle at a future time is highly likely to fall within the collision region, it indicates that the vehicle may collide with the obstacle. A region where a collision occurs may vary across different types of road scenarios. The types of road scenarios may include, for example, a following scenario, a crossing scenario, a turning scenario, etc.

In some alternative embodiments, a road scenario type may be determined based on a relative position relationship, a relative speed relationship, etc., between the vehicle and the obstacle. For example, if a lateral speed of the obstacle relative to the vehicle is greater than a lateral speed threshold, the road scenario type is determined as a crossing scenario. If the lateral speed of the obstacle relative to the vehicle is less than the lateral speed threshold and there is no turning trend for the vehicle, the road scenario type is determined as a following type. If there is a turning trend for the vehicle, the road scenario type is determined as a turning scenario.

In some alternative embodiments, a collision region corresponding to a following scenario may include two types, namely, a following collision region and a following & overtaking collision region. A collision region corresponding to a crossing scenario may include a crossing collision region and a crossing & lateral-deviation collision region. A collision region corresponding to a turning scenario may include a left-turn collision region and a right-turn collision region. A collision region may be determined according to a collision region determination rule corresponding to different scenario types. For example, in a following scenario, if there is an overtaking trend for the vehicle, a collision region may be determined as a following & overtaking collision region, and the collision region may be determined according to a parameter of the following & overtaking collision region. The parameter may include a parameter for determining a region boundary of the collision region. The region boundary may include boundaries in four directions surrounding the vehicle. The parameter may be set according to a vehicle size and an obstacle size. Whether there is an overtaking trend for the vehicle may be determined according to a speed of the vehicle relative to the obstacle and a longitudinal distance between the obstacle and the vehicle in a local coordinate system of the vehicle. For example, if the speed of the vehicle relative to the obstacle is greater than zero and the longitudinal distance between the vehicle and the obstacle is less than a distance threshold (e.g., 5m), it is determined that there is an overtaking trend for the vehicle. That is, the collision region type may include a following collision region, a following & overtaking collision region, a crossing collision region, a crossing & lateral-deviation collision region, a left-turn collision region, a right-turn collision region, etc. According to the current vehicle state information and the current obstacle state information, the collision region type in which the vehicle may collide with obstacle may be determined in a manner described above.

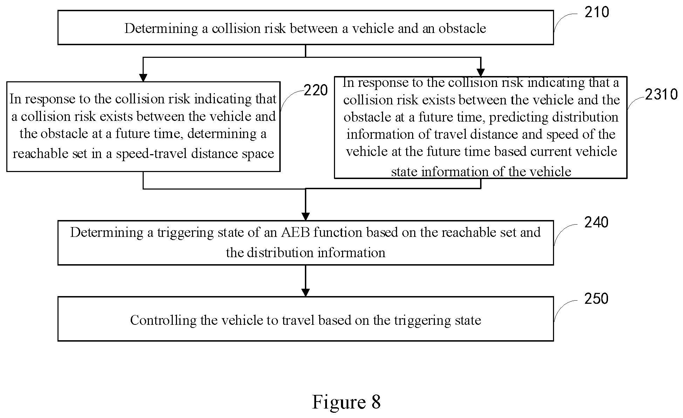

Illustratively, Figure 7 is a schematic diagram of a collision region provided by an exemplary embodiment of the present disclosure. As shown in Figure 7, a collision region is a certain region with respect to surroundings of an ego vehicle, where *W*₀ represents a width of the ego vehicle and *H*₀ represents half of a length of the ego vehicle. w₁, w₂, and h₁ represent parameters for determining a region boundary of the collision region. Different collision region types correspond to different parameters, which may be determined according to characteristics of different collision region types. For example, for a left-turn collision region, w₁ is larger and w₂ is smaller, while for a right-turn collision region, w₁ is smaller and w₂ is larger. Alternatively, w₁, w₂, and h₁ may be functions of a size of the obstacle, for example, w₁ and w₂ may be functions of a width of the obstacle, and h₁ may be a function of a length of the obstacle. During actual traveling, a specific collision region may be determined according to an obstacle size, a collision region type, and w₁, w₂, and h₁ corresponding to the collision region type. The front, rear, left, and right in Figure 8 are the front, rear, left and right sides with respect to the ego vehicle.

In some alternative embodiments, since processes in which the vehicle collides with an obstacle in different collision regions may be different, different collision region types may correspond to different speed intervals and/or different travel distance intervals to represent different speeds and travel distances when a collision occurs. Illustratively, for a following & overtaking collision region, a corresponding speed interval is 0~35 meters per second, and a corresponding travel distance interval is 0.5~6 meters; for a following collision region, a corresponding speed interval is 0~35 meters per second, and a corresponding travel distance interval is 0~6 meters; for a crossing & lateral-deviation collision region, a corresponding speed interval is 0~25 meters per second, and a corresponding travel distance interval is -1.0~6 meters; for a crossing collision region, a corresponding speed interval is 0~25 meters per second, and a corresponding travel distance interval is -0.5~6 meters; for a left-turn collision region, a corresponding speed interval is 0~15 meters per second, and a corresponding travel distance interval is -1.0~6 meters; and for a right-turn collision region, a corresponding speed interval is 0~15 meters per second, and a corresponding travel distance interval is -1.0~6 meters. Only some examples of a speed interval and a travel distance interval corresponding to a collision region type are given here, and practical applications are not limited to the speed interval and the travel distance interval in the above examples. Taking a speed interval of 0~35 meters per second and a travel distance interval of 0.5~6 meters as an example, a target boundary point set includes four target corner points, which may be represented as (0.5,0), (0.5,35), (6,0), and (6,35). Then, a target subset may be obtained based on the target boundary point set.

In the embodiments of the present disclosure, a speed interval and a travel distance interval corresponding to a collision region type can be determined according to the collision region type, and then a target subset can be determined based on the speed interval and the travel distance interval, which allow the target subset to better conform to an actual situation where a vehicle may collide with an obstacle, further improving accuracy and effectiveness of the target subset.

In some alternative embodiments, generating a reachable set based on the target subset at step 2220 may include:

determining a first deceleration value corresponding to the collision region type and determining a first time step for state transition; and generating the reachable set based on the target subset, the first deceleration value, the first time step, and a backward state transition rule.

A maximum deceleration that the vehicle can reach by performing emergency braking may vary for different collision region types. Therefore, a respective first deceleration value may be determined according to a collision region type, as a backward acceleration (or referred to as a control variable, a control constraint) for the backward state transition rule, namely, at in Formulas (4) and (5) described above. The first time step is a time interval for backward derivation, such as ΔT in Formulas (4) and (5) described above. Specifically, the first time step may be a backward time step for backward recursion.

In some alternative embodiments, a speed interval, a travel distance interval, and a first deceleration value corresponding to different collision region types may be predetermined parameters. For example, relevant parameters of the vehicle may be determined according to actual performance of the vehicle. Illustratively, a first deceleration value corresponding to a following & overtaking collision region and a following collision region is -10m/s², a first deceleration value corresponding to a crossing & lateral-deviation collision region is -8m/s², a first deceleration value corresponding to a crossing collision region is -10m/s², a first deceleration value corresponding to a left-turn collision region is -6m/s², and a first deceleration value corresponding to a right-turn collision region is -8m/s². Examples of a first deceleration value corresponding to some collision region types are given here only for demonstrations, and practical applications are not limited to the above examples.

In the embodiment of the present disclosure, a corresponding first deceleration value according to a collision region type is determined as an acceleration (i.e., a control constraint) for a backward state transition rule, thus a reachable set obtained through backward derivation better conforms to an actual situation where a vehicle collides with an obstacle, further enhancing accuracy and effectiveness of the reachable set. Furthermore, determining a first time step facilitates performing backward recursion according to the first time step to obtain initial subsets at different times, and a longer time period from a current time to a collision time is partitioned into shorter first time steps, thereby determining a travel distance that the vehicle travels to a collision point through a differential principle, which improves accuracy and effectiveness of a travel distance at each time.

Figure 8 is a flow schematic diagram of a control method for a vehicle, provided by yet another exemplary embodiment of the present disclosure.

In some alternative embodiments, on the basis of any of the above embodiments, as shown in Figure 8, determining distribution information of travel distance and speed of the vehicle at the future time at step 230 may include step 2310.

At step 2310, distribution information of travel distance and speed of the vehicle at the future time is predicted based on current vehicle state information of the vehicle. Similarly, for a plurality of future times, distribution information of travel distance and speed of the vehicle at each future time is predicted based on current vehicle state information of the vehicle.

For the current vehicle state information, the distribution information of travel distance and speed of the vehicle at the future time, and the number of future times, reference may be made to the foregoing content, which will not be further elaborated here.

In some alternative embodiments, the current vehicle state information may be transformed into a coordinate system corresponding to the speed-travel distance space, and then, in the speed-travel distance space, distribution information of travel distance and speed of the vehicle at each future time may be predicted based on a kinematic model corresponding to the vehicle.

In the embodiment of the present disclosure, a distribution of speed and travel distance of the vehicle at a future time can be effectively obtained, by predicting distribution information of speed and travel distance of the vehicle at the future time based on current vehicle state information of the vehicle, facilitating the determination of whether a speed and a travel distance of the vehicle at a future time fall within a reachable region corresponding to a reachable set, thereby providing effective data reference for determining a latest issuance time.

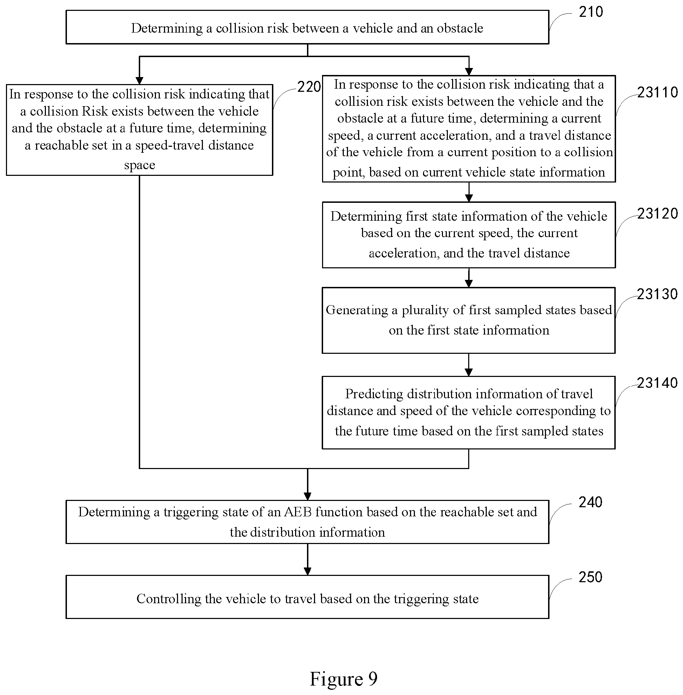

Figure 9 is a flow schematic diagram of a control method for a vehicle, provided by still another exemplary embodiment of the present disclosure.

In some alternative embodiments, as shown in Figure 9, predicting distribution information of travel distance and speed of the vehicle at the future time based on current vehicle state information of the vehicle at step 2310 may include steps 23110~23140.

At step 23110, a current speed, a current acceleration, and a travel distance of the vehicle from a current position to a collision point are determined based on current vehicle state information.

For the current vehicle state information and the collision point, reference may be made to the foregoing content, which will not be further elaborated here. The current position, the current speed, and the current acceleration of the vehicle may be obtained from the current vehicle state information, and the travel distance of the vehicle from the current position to the collision point is a length of a travel trajectory from the current position of the vehicle to the collision point. Specifically, after obtaining the current vehicle state information, the current position, the current speed, and the current acceleration of the vehicle may be obtained from the current vehicle state information. No processing is performed on the current speed and the acceleration of the vehicle. The travel distance of the vehicle from the current position to the collision point (or simply a travel distance) is determined according to the current position and a travel trajectory from the current position to the collision point.

In some alternative embodiments, the travel distance of the vehicle from the current position to the collision point may be discretized based on a differential principle, that is, a time period from the current position of the vehicle to the collision point may be discretized into a plurality of sub-time periods with a certain time interval; then a product of a vehicle speed in each sub-time period and the time interval is taken as a travel distance within the sub-time period; and finally, a travel distance within the entire time window from the current position of the vehicle to the collision point may be obtained by summing travel distances within the plurality of sub-time periods.

At step 23120, first state information of the vehicle is determined based on the current speed, the current acceleration, and the travel distance.

The first state information includes the travel distance of the vehicle from the current position to the collision point, the current speed and the current acceleration of the vehicle.

Illustratively, the first state information may be represented as a state vector as follows: ${X}_{0} = {\left[a, v, s\right]}^{T}$ Formula (6) where a represents the acceleration of the vehicle, v represents the speed of the vehicle, s represents the travel distance of the vehicle to the collision point, and T represents transpose. Alternatively, the travel distance of the vehicle to the collision point is a value in a coordinate system of a speed-travel distance space with the collision point as the origin. Since the vehicle has not yet reached the collision point at a current time, s is negative, that is, the vehicle is on the left half axis of a horizontal axis (i.e., a travel distance d) of a speed-travel distance space shown in Figure 5 at the current time. The current time is represented as a time T₀ (or a time 0), and the first state information [a, v, s] may also be represented as [a₀, v₀, s₀].

At step 23130, a plurality of first sampled states are generated based on the first state information.

The plurality of first sampled states are a plurality of sampled states of the vehicle, obtained by discretizing the first state information.

In some alternative embodiments, the first state information may be discretized according to a certain probability distribution, such that the plurality of obtained first sampled states follow a probability distribution. The probability distribution may be, for example, a Gaussian distribution, that is, a mean of the plurality of first sampled states is the first state information. In other words, the first state information is determined as a state mean, and a Gaussian state probability distribution ellipse of the vehicle is formed by taking the state mean and a pre-obtained state variance as a mean and a variance of a Gaussian distribution. The plurality of first sampled states refer to a plurality of states obtained by sampling in the probability distribution ellipse, and the sampling manner may be random sampling or other sampling manners. The plurality of first sampled states are taken as reference states for predicting a future state of the vehicle. The state variance may be obtained through pre-calibration. The state variance characterizes a deviation of a positioning result of the vehicle from an actual position of the vehicle.

In some alternative embodiments, in a case where a state of the vehicle follows a Gaussian distribution, the plurality of first sampled states may be generated through unscented Kalman filtering based on the first state information. In a case where a state of the vehicle does not follow a Gaussian distribution, the plurality of first sampled states may be generated based on particle filtering or other manners. There is no limitation on the specific manner for generating the plurality of first sampled states.

At step 23140, distribution information of travel distance and speed of the vehicle corresponding to the future time is predicted based on the first sampled states. For a plurality of future times, distribution information of travel distance and speed of the vehicle corresponding to each future time is predicted based on each of the first sampled states.

Each first sampled state characterizes a discretized state of the vehicle at a current time, and a state mean of the first sampled states is the first state information. A state of each first sampled state at each future time may be predicted respectively based on a kinematic model corresponding to the vehicle. A state of each first sampled state at each future time characterizes respectively a state to which the first sampled state may move according to the kinematic model of the vehicle, that is, a possible distribution of states of the vehicle at each future time. Therefore, distribution information of travel distance and speed of the vehicle corresponding to each future time respectively may be determined based on the states of the first sampled states respectively at each future time.

In the embodiments of the present disclosure, a plurality of first sampled states are generated by discretizing first state information of the vehicle at a current time, and then distribution information of speed and travel distance of the vehicle at the future time is predicted based on the plurality of first sampled states. The plurality of first sampled states follow a certain probability distribution, which facilitates obtaining a probability distribution of speed and travel distance of the vehicle at the future time through state transition, thereby characterizing a distribution of the vehicle at the future time in a probabilistic manner, and improving accuracy and effectiveness of a future state prediction result of the vehicle.

In some alternative embodiments, predicting distribution information of travel distance and speed of the vehicle corresponding to the future time based on the first sampled states at step 23140 may include:

determining a first state transition rule corresponding to a preset motion model, and determining a second time step; and determining the distribution information of travel distance and speed corresponding to the future time based on the first sampled states, the second time step, and the first state transition rule.

For a plurality of future times, these operations may be performed for each future time. The preset motion model may be a constant velocity motion model, a constant acceleration motion model, or a variable acceleration motion model, which may be set according to actual needs or determined according to an actual motion state of the vehicle. The first state transition rule corresponding to the preset motion model refers to a transition rule from a state of the vehicle at one time to a state at another time according to the preset motion model.

In some alternative embodiments, the second time step is used for making a future time corresponding to distribution information correspond to a backward time for generating a reachable set, that is, making the distribution information correspond to a reachable subset in the reachable set. The second time step may be determined according to the backward time for generating the reachable set. Reference may be made to the foregoing content, which will not be further elaborated here.

In some alternative embodiments, taking the preset motion model being a constant acceleration motion model as an example, the first state transition rule may be represented as follows: $\left[\begin{matrix}{a}_{t} \\ {v}_{t} \\ {s}_{t}\end{matrix}\right] = \left[\begin{matrix}1 & 0 & 0 \\ ΔT & 1 & 0 \\ \frac{1}{2} {\left(ΔT\right)}^{2} & ΔT & 1\end{matrix}\right] ⋅ \left[\begin{matrix}{a}_{t - 1} \\ {v}_{t - 1} \\ {s}_{t - 1}\end{matrix}\right]$ Formula (7) where Xₜ₋₁ = [aₜ₋₁, vₜ₋₁, sₜ₋₁]*^{T}* represents state information of any first sampled state at a time t-1, and Xₜ = [aₜ, vₜ, sₜ]*^{T}* represents state information of the first sampled state at a time t, t=1, 2, ..., N, where N represents a number of predicted future times. When t=1, Xₜ₋₁ is a state vector X₀ of the first sampled state at a time 0. ΔT represents a time interval between the time t-1 and the time t. For state transition through recursion, ΔT may represent the second time step for recursion. A state (which may be referred to as a predicted state) of the first sampled state at each future time may be obtained based on X₀ by sequentially performing state transition with the second time step. Then, distribution information of travel distance and speed of the vehicle at each future time is determined based on the predicted states of the first sampled states respectively at each future time.

In some alternative embodiments, the first state transition rule may be represented as follows: $\left[\begin{matrix}{a}_{t} \\ {v}_{t} \\ {s}_{t}\end{matrix}\right] = \left[\begin{matrix}1 & 0 & 0 \\ ΔT ∗ t & 1 & 0 \\ \frac{1}{2} {\left(ΔT∗t\right)}^{2} & ΔT ∗ t & 1\end{matrix}\right] ⋅ \left[\begin{matrix}{a}_{0} \\ {v}_{0} \\ {s}_{0}\end{matrix}\right]$ Formula (8)

Formula (8) is a state transition rule from a current time (represented as a time 0) to a time t. For other symbols, reference may be made to the foregoing embodiments. A predicted state of a first sampled state at each future time is obtained by performing state transition on a state vector of the first sampled state at the time 0.

In some alternative embodiments, a future time may be determined according to a backward time for the reachable set. For example, according to the reachable set, times between a collision time (i.e. a time T_{C}) and a current time (or a time Tᵣ) is obtained by performing backward derivation from the time T_{C} with a backward time step, and then future time may be times that have a one-to-one correspondence with these times between the time T_{C} and the current time (or the time Tᵣ). The time Tᵣ represents a time at which a brake response time starting from the current time ends. Taking a backward time coinciding with the time Tᵣ as an example, states of the first sampled states at the time Tᵣ may be first obtained respectively by performing derivation according to Formula (7) based on a time interval (i.e., a brake response time tᵣ) between the time Tᵣ and the current time, and then distribution information at the time Tᵣ is obtained; then, distribution information respectively corresponding to each future time after the time Tᵣ is obtained by performing recursion with the second time step, based on the respective states of the first sampled states at the time Tᵣ, thereby obtaining distribution information of travel distance and speed of the vehicle having one-by-one correspondence with an initial subset at each time.

In the embodiments of the present disclosure, after obtaining a plurality of first sampled states characterizing a probability distribution of the vehicle at a current time, distribution information of travel distance and speed of the vehicle respectively corresponding to each future time is determined based on the first sampled states and the first state transition rule, thereby implementing probabilistic prediction of a future state of the vehicle through probability distribution, which improves effectiveness of a vehicle state prediction result.

In some alternative embodiments, predicting distribution information of travel distance and speed of the vehicle corresponding to a future time based on the first sampled states at step 23140 may include:

determining a 1st predicted state corresponding to the first sampled state at a future time T₁ based on the first sampled state and a pre-configured first state transition rule; determining distribution information of travel distance and speed corresponding to the future time T₁ based on the 1st predicted state; determining, based on an i-th predicted state corresponding to a future time Tᵢ and the first state transition rule, a (i+1)-th predicted state respectively corresponding to the i-th predicted state at a future time Tᵢ₊₁; i=1, 2, ..., N-1, where N is the number of future times; and determining distribution information of travel distance and speed corresponding to the future time Tᵢ₊₁ based on the (i+1)-th predicted state.

Similarly, a 1st predicted state corresponding to each of the plurality of first sampled states at a future time T₁ is determined; distribution information of travel distance and speed corresponding to the future time T₁ is determined based on the 1st predicted states respectively corresponding to the plurality of first sampled states; a (i+1)-th predicted state at a future time Tᵢ₊₁, corresponding to each of the i-th predicted states, is determined, and distribution information of travel distance and speed corresponding to the future time Tᵢ₊₁ is determined based on the (i+1)-th predicted states respectively corresponding to the i-th predicted states. If the current time is represented as a time T₀, the future time Tᵢ represents the i-th future time. If the current time is taken as a time 0, the future time Tᵢ may also be referred to as a future time i. The pre-configured first state transition rule described above is the state transition rule of Formula (7), where i corresponds to t in Formula (7). A 1st predicted state corresponding to any first sampled state at the future time T₁ is X₁ = [a₁, v₁, s₁]*^{T}*. From this 1st predicted state, a travel distance s₁ and a speed v₁ corresponding to the future time T₁ may be obtained. Distribution information of travel distance and speed corresponding to the future time T₁ is determined based on travel distances s₁ and speeds v₁ respectively corresponding to the first sampled states at the future time T₁. For example, a travel distance mean and a travel distance variance are determined based on the travel distances s₁ respectively corresponding to the first sampled states at the future time T₁, and a speed mean and a speed variance are determined based on the speeds v₁ respectively corresponding to the first sampled states at the future time T₁. Then, distribution information of travel distance and speed corresponding to the future time T₁ is determined according to the travel distance mean, the travel distance variance, the speed mean, and the speed variance. Then, based on the 1st predicted states respectively corresponding to the first sampled states at the future time T₁, 2nd predicted states respectively corresponding to the first sampled states at a future time T₂ are obtained through the state transition rule of Formula (7). Distribution information of travel distance and speed corresponding to the future time T₂ is determined based on travel distances s₂ and speeds v₂ respectively corresponding to the first sampled states at the future time T₂. The specific determination manner is similar to that for the distribution information of travel distance and speed corresponding to the future time T₁, and will not be further elaborated here. By analogy, distribution information of travel distance and speed respectively corresponding to the future times may be obtained.

In some alternative embodiments, the future time T₁ may be the time Tᵣ described above, or a time near the time Tᵣ that corresponds to a backward time for the reachable set. Alternatively, a time interval between the time T₁ and the time T₀ may be the same as or different from the second time step. In a case where the time interval between the time T₁ and the time T₀ is different from the second time step, distribution information of the vehicle at the time T₁ may be determined based on the time interval between the time T₁ and the time T₀ according to the first state transition rule described above.

In the embodiments of the present disclosure, by obtaining a state of a next future time of one future time by performing recursion based on a state of the future time according to a second time step, a time period of a certain future duration is discretized into a plurality of sub-time periods, ensuring accuracy and effectiveness of a vehicle travel distance.

In some alternative embodiments, predicting distribution information of travel distance and speed of the vehicle corresponding to the future time based on the first sampled states at step 23140 may include:

determining first state distribution information of the vehicle corresponding to a future time based on the first sampled states and a pre-configured first state transition rule; wherein the first state distribution information includes a speed mean, a speed variance, a travel distance mean, and a travel distance variance; correcting, based on a pre-configured vehicle state validity rule, a speed mean and a travel distance mean that do not satisfy a validity condition in the first state distribution information to obtain distribution information of travel distance and speed corresponding to the future time.

Similarly, first state distribution information of the vehicle corresponding to each future time is determined based on each of the first sampled states and a pre-configured first state transition rule; and a speed mean and a travel distance mean that do not satisfy a validity condition in the first state distribution information are corrected to obtain distribution information of travel distance and speed corresponding to each future time. For any future time Tᵢ, a speed mean in the first state distribution information refers to an average of speeds (or referred to as predicted speeds) vᵢ respectively corresponding to the first sampled states at the future time Tᵢ, and a speed variance may be obtained based on the predicted speeds vᵢ and the speed mean of the first sampled states respectively at the future time Tᵢ. A travel distance mean is an average of travel distances (or referred to as predicted travel distances) sᵢ respectively corresponding to the first sampled states at the future time Tᵢ, and a travel distance variance may be obtained based on the predicted travel distances and the travel distance mean. Specific details are not further elaborated.

In some alternative embodiments, the vehicle state validity rule and the validity condition may be set based on the vehicle's traveling conditions in an actual road environment. For example, when the vehicle is in a deceleration state and the vehicle decelerates to zero (i.e., 0), reverse acceleration should be avoided. A case where reverse acceleration occurs indicates that a vehicle speed (i.e., a speed mean) does not satisfy the validity condition, and the vehicle speed is corrected to 0, and a respective travel distance (i.e., a travel distance mean) is corrected to a travel distance at which a speed becomes 0. For another example, when the vehicle accelerates, a speed threshold required by regulations of a current road segment should not be exceeded. A case where a vehicle speed exceeds the speed threshold indicates that the vehicle speed does not satisfy the validity condition, and the vehicle speed is corrected to the speed threshold. There is no limitation on the specific vehicle state validity rules. The corrected state distribution information corresponding to the first state distribution information at each future time is determined as distribution information of travel distance and speed of the vehicle respectively corresponding to each future time.

In some alternative embodiments, predicted states of the first sampled states respectively at each future time may be corrected based on a pre-configured vehicle state validity rule, and then distribution information of travel distance and speed of the vehicle at the future time may be determined, based on the corrected states of the first sampled states respectively at the future time. The correction principle is similar to that for correcting the speed mean and the travel distance mean described above, and will not be elaborated here.

In the embodiments of the present disclosure, after obtaining distribution information of travel distance and speed of the vehicle respectively corresponding to each future time based on a first state transition rule, the distribution information is further corrected based on a vehicle state validity rule, which allows the distribution information of travel distance and speed of the vehicle to better satisfy the vehicle' traveling conditions in an actual road environment, thereby improving effectiveness of the distribution information of travel distance and speed of the vehicle at future times.

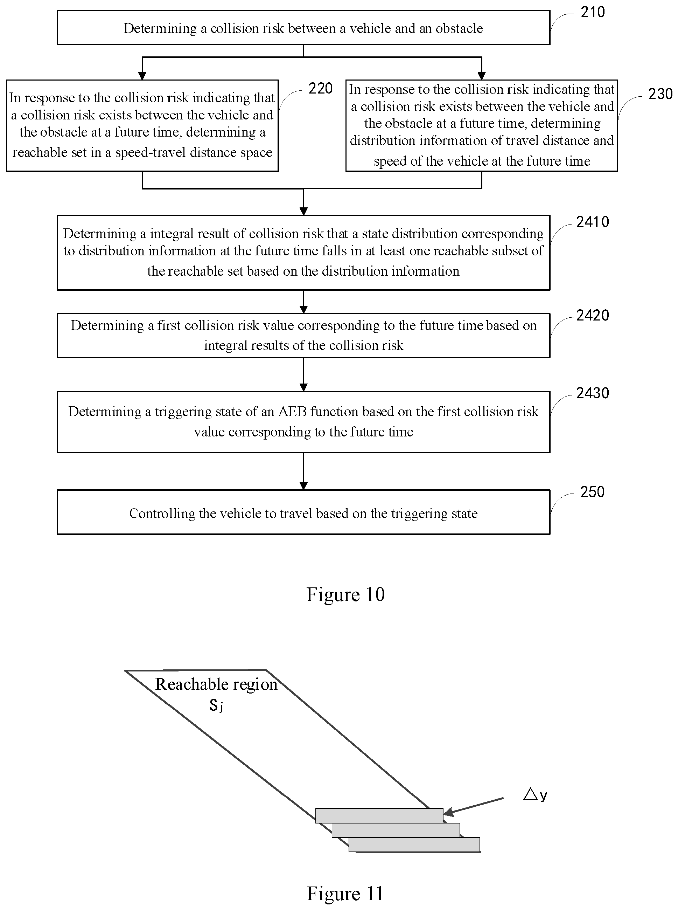

Figure 10 is a flow schematic diagram of a control method for a vehicle, provided by yet another exemplary embodiment of the present disclosure.

In some alternative embodiments, on the basis of any of the above embodiments, as shown in Figure 10, determining a triggering state of an AEB function based on the reachable set and the distribution information at step 240 may include steps 2410~2430.

At step 2410, an integral result of a collision risk that a state distribution corresponding to distribution information at the future time falls in at least one reachable subset of the reachable set is determined based on the distribution information of the future time.

For a plurality of future times, the step 2410 may be performed for each future time. The distribution information at the future time is distribution information of travel distance and speed of the vehicle at the future time. The state distribution corresponding to the distribution information is a two-dimensional probability distribution ellipse of travel distance and speed (which may be referred to as a third probability distribution ellipse). The collision risk integral result of the state distribution corresponding to the distribution information respectively in each reachable subset may be obtained by calculating an integral result (i.e., an integral value) of the two-dimensional probability distribution ellipse within a reachable region corresponding to each reachable subset. A collision risk integral result of the state distribution corresponding to the distribution information in any reachable subset characterizes a probability of a speed and a travel distance of the vehicle at the future time falling within the reachable subset.

At step 2420, a first collision risk value corresponding to the future time is determined based on collision risk integral results.

The respective collision risk integral result of a state at the future time in any reachable subset is determined as a first collision risk value corresponding to the future time in the reachable subset. The first collision risk value characterizes a probability of the vehicle colliding with an obstacle if the vehicle initiates emergency braking from the future time, that is, a probability of the vehicle evolving to a target subset over a certain period of dynamic evolution if the vehicle travels under a control constraint according to the distribution information of travel distance and speed at the future time. A first collision risk value corresponding to each future time includes a collision risk value at the future time respectively corresponding to each reachable subset.

At step 2430, a triggering state of an AEB function is determined based on the first collision risk value corresponding to the future time.

For a plurality of future times, a triggering state of an AEB function is determined based on a first collision risk value respectively corresponding to each of the plurality of future times. A first collision risk value corresponding to any future time characterizes a probability of initiation of emergency braking at the future time causing a speed and a travel distance of the vehicle to evolve to a target subset, that is, a probability of a collision occurring within a certain time period after the future time. If the first collision risk value is larger, for example, the first collision risk value exceeds a first collision risk threshold, it indicates that there is a high probability that the vehicle will collide with the obstacle if emergency braking is initiated at the future time. Then, based on a time relationship between the future time and a current time, it may be determined whether to issue a braking signal at the current time, that is, the triggering state of the AEB function is determined.

In the embodiments of the present disclosure, distribution information of travel distance and speed of the vehicle at a future time characterizes a distribution probability of travel distance and speed of the vehicle at the future time, and a reachable set characterizes that it evolves to a reachable region of the target subset over a certain period of dynamic evolution. If a travel distance and a speed of the vehicle at a future time fall within any reachable subset in the reachable set, it indicates that if emergency braking is initiated at the future time, the vehicle will collide with the obstacle. Based on this, a latest issuance time for a braking signal can be effectively determined, that is, whether a current time is the latest issuance time may be determined, ensuring accuracy and effectiveness of trigger timing for the AEB function.

In some alternative embodiments, determining an integral result of a collision risk that a state distribution corresponding to distribution information at the future time falls in at least one reachable subset of the reachable set based on the distribution information at step 2410 may include:

determining a two-dimensional probability distribution function of travel distance and speed based on the distribution information at the future time; and determining a respective integral value of the two-dimensional probability distribution function within a reachable region corresponding to the at least one reachable subset, as the integral result of the collision risk.

An integral value of the two-dimensional probability distribution function respectively within a reachable region corresponding to each reachable subset is determined, as the integral result of the collision risk. The two-dimensional probability distribution function may be represented as a two-dimensional probability distribution ellipse, i.e., the third probability distribution ellipse described above. Then, the collision risk integral result may be obtained by calculating, respectively, an integral value of the third probability distribution ellipse within a reachable region corresponding to each reachable subset in the speed-travel distance space.

Illustratively, if the number of reachable subsets is m and the number of future times is N, a sequence of collision risk integral results of a two-dimensional probability distribution function of travel distance and speed at each future time Tᵢ within a reachable region Sⱼ corresponding to each reachable subset may be represented as follows: ${P}_{collision}^{i} = \left[{P}_{{collision}_{i 1}}, {P}_{{collision}_{i 2}}, ⋯, {P}_{{collision}_{im}}\right]$ Formula (9) ${P}_{{collision}_{ij}} = {\int }_{{A}_{j}} {P}_{\vec{vd}} \left(v, d\right) dA$ Formula (10) where i=1, 2, ..., N, j=1, 2, ..., m, P_{collisionᵢj} represents a collision risk integral result of the two-dimensional probability distribution function of travel distance and speed at the future time Tᵢ within a reachable region Sⱼ corresponding to a reachable subset. A*ⱼ* represents the reachable region Sⱼ corresponding to a j-th reachable subset, and *P_{v̅d̅}*(*v, d*) represents the two-dimensional probability distribution function of travel distance and speed at the future time Tᵢ. In the embodiments of the present disclosure, a two-dimensional probability distribution function of travel distance and speed at each future time is determined, which facilitates the calculation of an integral value of the two-dimensional probability distribution function within a reachable region corresponding to a reachable subset in a reachable set, thereby effectively determining a first collision risk value at each future time, achieving probability-based issuance of a braking signal, and effectively improving accuracy and effectiveness of timing for issuing the braking signal.

In some alternative embodiments, determining an integral result of a collision risk that a state distribution corresponding to distribution information at the future time falls in at least one reachable subset of the reachable set based on the distribution information of the future time at step 2410 may include:

determining a plurality of rectangular sub-regions with preset heights based on a reachable region corresponding to the at least one reachable subset; determining respective sub-integral results of the state distribution corresponding to the distribution information in the plurality of rectangular sub-regions; and determining, based on the sub-integral results, the integral result of the collision risk that the state distribution corresponding to the distribution information falls in the at least one reachable subset.

For each reachable subset, a plurality of rectangular sub-regions with preset heights are determined based on a reachable region corresponding to the reachable subset. For the plurality of rectangular sub-regions, a sub-integral result of the state distribution corresponding to the distribution information in each rectangular sub-region is determined. The preset height may be any height, which may be set according to actual needs. As shown in Figure 6, a reachable region Sⱼ (j=1, 2, m) corresponding to a reachable subset is a quadrilateral with parallel upper and lower sides. In order to facilitate calculation of a collision risk integral result of a state distribution corresponding to distribution information of travel distance and speed of the vehicle, the reachable region Sⱼ corresponding to the reachable subset is decomposed into a plurality of rectangular sub-regions with a preset height, and then sub-integral results of the state distribution of the vehicle in the rectangular sub-regions are determined. A cumulative sum of the sub-integral results is taken as an integral result of the state distribution of the vehicle within the reachable region Sⱼ, and the integral result of the state distribution within the reachable region Sⱼ is taken as a collision risk integral result of the state distribution in the reachable subset, so as to obtain a collision risk integral result of the state distribution of the vehicle in the reachable subset.

In some alternative embodiments, Figure 11 is a schematic diagram of an integration principle provided by an exemplary embodiment of the present disclosure. As shown in Figure 11, a reachable region Sⱼ corresponding to a reachable subset is decomposed into a plurality of rectangular sub-regions with a height of △y (i.e., a preset height). An integral value (i.e., a sub-integral result) of a two-dimensional probability distribution function of the vehicle at a future time Tᵢ in each rectangular sub-region is calculated. Then, an integral result of the two-dimensional probability distribution function within the reachable region Sⱼ corresponding to the reachable subset is obtained, based on the respective sub-integral results of the two-dimensional probability distribution function within the rectangular sub-regions. The integral result of the two-dimensional probability distribution function within the reachable region Sⱼ corresponding to the reachable subset is taken as a collision risk integral result of a state distribution of the vehicle in the reachable subset.

In the embodiments of the present disclosure, integration of a two-dimensional probability distribution function over an irregular quadrilateral is transformed into integration over a regular rectangle, by decomposing a quadrilateral region of a reachable region corresponding to a reachable subset into a plurality of rectangular sub-regions with a preset height, which may simplify integral calculation and improve calculation efficiency of an integral result.

In some alternative embodiments, determining a triggering state of an AEB function based on the first collision risk value corresponding to the future time at step 2430 may include:
determining a first collision risk threshold; and determining the triggering state of the AEB function based on a comparison between the first collision risk value at the future time and the first collision risk threshold.

For a plurality of future times, the triggering state of the AEB function is determined based on a comparison between the first collision risk value at each of the future times and the first collision risk threshold. The first collision risk threshold may be preset empirically, or the first collision risk threshold may be determined by performing tests or data debugging on the vehicle. The first collision risk threshold may be represented as τ, illustratively, τ may be 0.5 or other values. A principle for determining the first collision risk threshold is to ensure effective issuance of an AEB function and avoid a decrease in positive triggering indicators, on the basis of avoiding false triggering of the AEB to improve user ride experience.

In some alternative embodiments, for each future time represented as a time Tⱼ, whether the vehicle will collide with the obstacle if initiating emergency braking at the time Tⱼ may be determined based on a comparison between respective first collision risk value corresponding to the time Tⱼ in each reachable subset and the first collision risk threshold. If a first collision risk value of distribution information corresponding to the time Tⱼ in any reachable subset is greater than or equal to the first collision risk threshold, it indicates that, if the vehicle travels according to the distribution information of speed and travel distance at the time Tⱼ, it will collide with the obstacle over a certain period of evolution. Thus, emergency braking needs to be initiated no later than the time Tⱼ to avoid collision. Then, whether a current time is a latest issuance time for a braking signal may be determined based on a comparison between a time interval of the future time relative to the current time and a brake response time. If it is determined that the current time is the latest issuance time, the triggering state of the AEB function is determined to as "to be triggered", that is, the braking signal needs to be issued at the current time. If the braking signal is not issued, it may result in the braking signal being issued too late, causing a collision between the vehicle and the obstacle at a future time. Reference may be made to the foregoing content for details, which will not be further elaborated here.

In some alternative embodiments, the number of future times may be the number of future times included in a time period starting from an end time of a brake response time (a time Tᵣ) or a next time (a time Tᵣ₊₁) after the time Tᵣ and ending at a collision time (a time T_{c}) or a previous time (a time T_{c-1}) before the collision time. Accordingly, the number of reachable subsets may be the number of times included in a time period starting from the time T_{c} or the time T_{c-1} and ending at the time Tᵣ₊₁ or the time Tᵣ. The time Tᵣ corresponds to a time T_{c-r}, the time Tᵣ₊₁ corresponds to a time T_{c-(r+1)}, .... Based on this, reachable subsets respectively corresponding to two-dimensional probability distribution functions at the future times are obtained. That is, the two-dimensional probability distribution functions are in one-to-one correspondence with the reachable subsets. Then, an integral value of a two-dimensional probability distribution function at a future time within a reachable region of a corresponding reachable subset is determined as a collision risk integral result corresponding to the future time. If there are collision risk integral results corresponding to one or more future times greater than the first collision risk threshold, whether a current time is a latest issuance time is determined based on a comparison between the one or more future times and the current time, or whether the current time is the latest issuance time is determined based on a comparison between a future time closest to the current time among the plurality of future times and the current time. Compared to determining an integral value of each two-dimensional probability distribution function within a reachable region corresponding to each reachable subset, determining an integral value of each two-dimensional probability distribution function within a reachable region of its corresponding reachable subset may effectively reduce a calculation amount and improve processing efficiency.

In some alternative embodiments, only an integral result of a two-dimensional probability distribution function corresponding to the time Tᵣ₊₁ within a reachable region of a reachable subset corresponding to the time T_{c-(r+1)} may be determined. If the integral result is greater than the first collision risk threshold, the triggering state of the AEB function is determined as "to be triggered" and a braking signal needs to be issued. Compared to determining an integral value of each two-dimensional probability distribution function within a reachable region of its corresponding reachable subset described above, a calculation amount may be further reduced, and processing efficiency may be further improved.

In the embodiments of the present disclosure, whether to trigger an AEB function is determined based on a comparison between a first collision risk value at each future time and a first collision risk threshold, realizing probability-based issuance of a braking signal. As a result, a result based on which whether to issue an AEB braking signal is assessed is not a Boolean variable, but a probability value falling within a range of 0 to 1. Thus, noise tolerance and scenario generalization capabilities of the AEB function may be improved, enabling the AEB function to meet increasingly higher safety requirements.

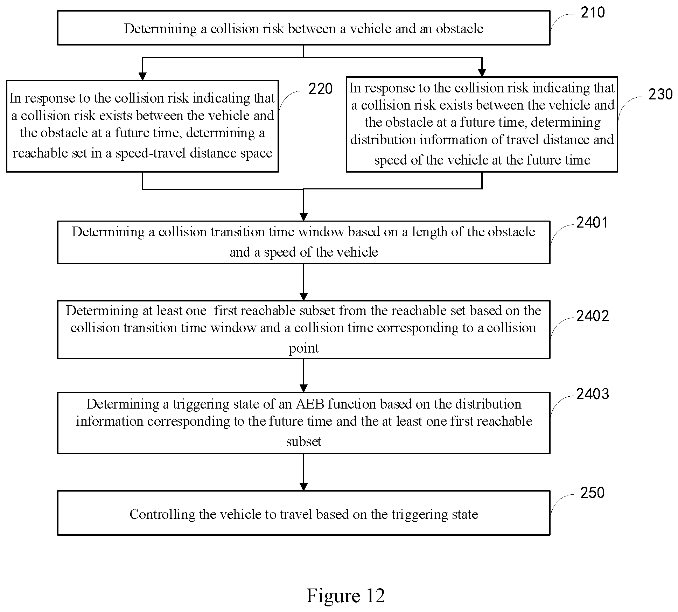

Figure 12 is a flow schematic diagram of a control method for a vehicle, provided by still another exemplary embodiment of the present disclosure.

In some alternative embodiments, on the basis of any of the above embodiments, as shown in Figure 12, determining a triggering state of an AEB function based on the reachable set and the distribution information at step 240 may include steps 2401~2403.

At step 2401, a collision transition time window is determined based on a length of the obstacle and a speed of the vehicle.

The length of the obstacle may be obtained from size information of the obstacle. The size information of the obstacle may be obtained from current obstacle state information. The speed of the vehicle may be obtained from current vehicle state information. The collision transition time window is a time interval of a transition process of the vehicle at a collision point. Assessment of whether to issue a braking signal requires considering that a travel distance and a speed of the vehicle within the collision transition time window are both prevented from falling within the reachable set, so as to ensure that the vehicle does not collide with the obstacle.

Illustratively, the collision transition time window Δt may be represented as follows: $Δt = \frac{{Length}_{Target}}{{v}_{Ego}}$ Formula (11)

In Formula (11), *Length_{Target}* represents the length of the obstacle, and *v_{Ego}* represents the speed of the vehicle.

At step 2402, at least one first reachable subset may be determined from the reachable set based on a collision time corresponding to a collision point and the collision transition time window.

The collision time corresponding to the collision point is a time at which a predicted trajectory of the vehicle intersects with a predicted trajectory of the obstacle, that is, the time T_{c} described above. The first reachable subset may be determined within a time period from a time T_{c-(r+1)} to T_{c-(r+1)}+Δt (that is, a time period Δt starting from the time T_{c-(r+1)}), that is, one or more reachable subsets within the time period from the time T_{c-(r+1)} to T_{c- (r+1)} +Δt among reachable subsets included in the reachable subset may be taken as first reachable subsets. For example, if the reachable set includes 50 reachable subsets, among which 10 reachable subsets are located within the time period from the time T_{c-(r+1)} to T_{c- (r+1)} +Δt, these 10 reachable subsets are respectively taken as first reachable subsets.

At step 2403, the triggering state of the AEB function is determined based on the distribution information corresponding to the future time and the at least one first reachable subset.

The triggering state of the AEB function is determined based on distribution information corresponding to each future time and each of the at least one first reachable subset. For each future time, an integral value of distribution information corresponding to the future time within a reachable region corresponding to each first reachable subset may be determined, respectively. Then, the triggering state of the AEB function may be determined based on a respective integral value of distribution information at each future time within a reachable region corresponding to each first reachable subset.

In some alternative embodiments, for each future time within a time period starting from an end time (a time Tᵣ) of a brake response time or a next time (a time Tᵣ₊₁) after the time Tᵣ and ending at a collision time (a time T_{c}) or a previous time (a time T_{c-1}) before the collision time, a respective integral value of distribution information corresponding to the future time within a reachable region corresponding to each first reachable subset may be determined. Then, the triggering state of the AEB function may be determined based on a respective integral value of distribution information at each future time within the reachable region corresponding to each first reachable subset.

In some alternative embodiments, the respective integral value of distribution information corresponding to only the time Tᵣ₊₁ within a reachable region corresponding to each first reachable subset may be determined, and then the triggering state of the AEB function may be determined based on the respective integral value of the distribution information corresponding to the time Tᵣ₊₁ within the reachable region corresponding to each first reachable subset.

In the embodiments of the present disclosure, by determining a collision transition time window, integral values of distribution information corresponding to each future time within reachable regions corresponding to only a small number of reachable subsets within the collision transition time window can be calculated, which, on one hand, may effectively reduce an integration calculation amount and improve processing efficiency, and on the other hand, may avoid a collision of the vehicle within the entire collision transition time window, further improving driving safety of the vehicle.

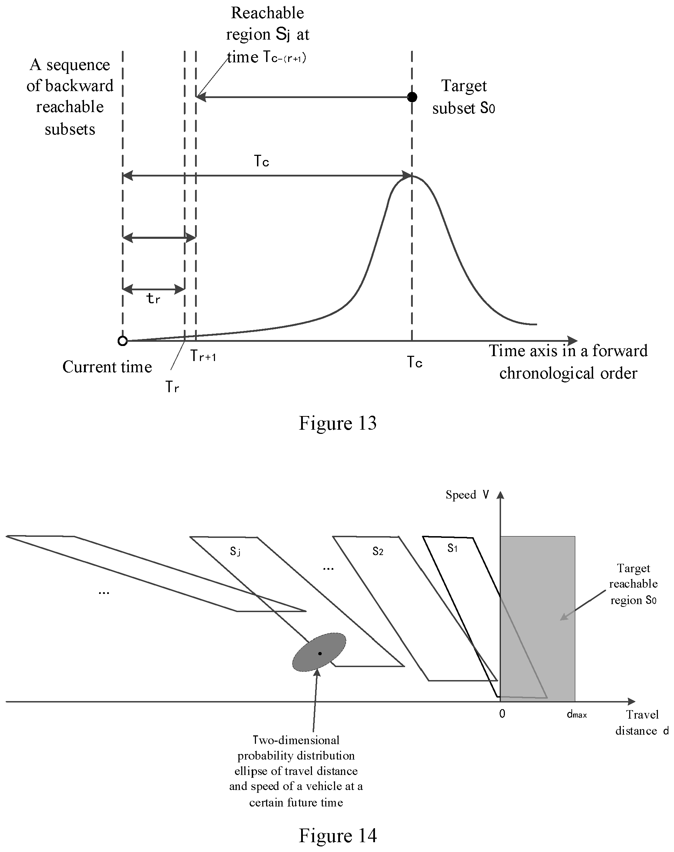

In some alternative embodiments, Figure 13 is a schematic diagram of a state of a vehicle over an entire time period starting from a current time, provided by an exemplary embodiment of the present disclosure. As shown in Figure 13, tᵣ represents a brake response time, Tᵣ represents a time at which the brake response time ends, and T_{c} represents a collision time corresponding to a collision point. Taking the current time being a time T₀ as an example, a horizontal axis from left to right is a forward time axis, and a time Tᵣ₊₁ represents a next time after the time Tᵣ. Distribution information of travel distance and speed of the vehicle at the future time is predicted along a forward time direction. To improve processing efficiency, only distribution information of travel distance and speed of the vehicle at the time Tᵣ₊₁is predicted. Based on a target subset, a reachable subset at a time T_{c-(r+1)} is obtained by performing backward derivation along a backward time direction, and then, an integral value of the distribution information of travel distance and speed at the time Tᵣ₊₁ within a reachable region corresponding to the reachable subset at the time T_{c-(r+1)}is determined. If the integral value is greater than the first collision risk threshold, a current time is determined as a latest issuance time, that is, the triggering state of the AEB function is "to be triggered", and a braking signal needs to be issued at the current time.

In some alternative embodiments, there is a one-to-one correspondence between forward future times and backward times, that is, distribution information of travel distance and speed of the vehicle at each future time may have a reachable subset at a corresponding time. For example, distribution information at the time Tᵣ₊₁ corresponds to a reachable subset at the time T_{c-(r+1)}, distribution information at a time Tᵣ₊₂ corresponds to a reachable subset at a time T_{c- (r+2)}, and so on. On this basis, an integral value of distribution information of travel distance and speed at each future time within a reachable region of a corresponding reachable subset may be calculated, respectively. Then, the triggering states of the AEB function may be determined respectively, based on the integral value of each future time within the reachable region of the corresponding reachable subset. A reachable region of a reachable subset is a reachable region corresponding to the reachable subset. For the correspondence between the forward future times and the backward times, reference may be made to the foregoing content, which is not limited to the above examples.

In some alternative embodiments, Figure 14 is a schematic diagram of distribution information of travel distance and speed of a vehicle at a future time, provided by an exemplary embodiment of the present disclosure. As shown in Figure 14, distribution information of travel distance and speed of the vehicle at a certain future time is represented as a two-dimensional probability distribution ellipse (i.e. a two-dimensional probability distribution function). By calculating an integral value of the two-dimensional probability distribution function within a reachable region Sⱼ (j=1, 2, ..., m, where m represents the number of reachable subsets) corresponding to each reachable subset, a first collision risk value corresponding to the future time is obtained. Then, whether an AEB function is triggered at a current time is determined based on the first collision risk value corresponding to the future time. Reference may be made to the foregoing content for the specific operations.

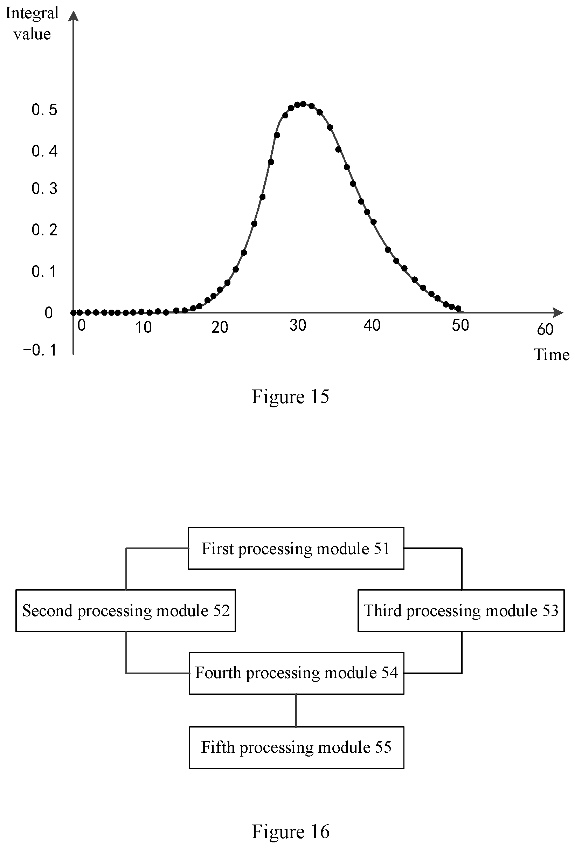

In some alternative embodiments, Figure 15 is a schematic diagram of an integral result of distribution information at a single future time in each reachable subset, provided by an exemplary embodiment of the present disclosure. As shown in Figure 15, a horizontal axis represents time, on which different coordinates correspond to different reachable subsets at different time, and a vertical axis represents an integral value. A black dot in the figure represents an integral value of a two-dimensional probability distribution ellipse at a future time shown in Figure 14 within a reachable region corresponding to each reachable subset, and the integral value is calculated based on rectangular sub-regions having a preset height shown in Figure 11. Taking the number of reachable subsets being 50 as an example, based on the two-dimensional probability distribution ellipse shown in Figure 14, both a speed mean and a travel distance mean of distribution information at a single future time are located at a boundary of a reachable region Sⱼ corresponding to a reachable subset. Half of the two-dimensional probability distribution ellipse is located within the reachable region Sⱼ, and the integral values of the two-dimensional probability distribution ellipse within the reachable regions should have a probability peak of nearly 50%, which has been verified by the integral result shown in Figure 15, that is, a probability peak of 0.5 appears, thus verifying effectiveness of the integration principle shown in Figure 11.

In some alternative embodiments, on the basis of any of the above embodiments, the current vehicle state information of the vehicle may be noise-reduced vehicle state information. The current vehicle state information may be obtained by:
determining first vehicle state information of the vehicle at a current time based on sensor data acquired by a sensor on the vehicle; performing noise reduction processing on the first vehicle state information to obtain noise-reduced second vehicle state information; and determining the current vehicle state information based on the second vehicle state information.

The sensor on the vehicle may include an inertial measurement unit (IMU), a global positioning system (GPS), a camera, a LiDAR, a millimeter wave radar, etc. The first vehicle state information of the vehicle may be determined based on data acquired by an IMU, a GPS, etc. The first vehicle state information may be raw state information obtained through perception, that is, state information that has not been subject to processing such as cleaning, noise reduction, etc.

In some alternative embodiments, data cleaning may be first performed on the sensor data to obtain the cleaned sensor data, and then the first vehicle state information of the vehicle at the current time may be determined based on the cleaned sensor data. Data cleaning may improve the quality of the sensor data, thereby further enhancing effectiveness of the obtained first vehicle state information.

In some alternative embodiments, noise reduction processing is used for eliminating or reducing noise in state information to improve accuracy and effectiveness of the state information.

In some alternative embodiments, any practicable noise reduction approaches may be adopted to perform noise reduction on the first vehicle state information to obtain the noise-reduced second vehicle state information. For example, noise reduction may be performed through filtering. The filtering may include unscented Kalman filtering, particle filtering, or the like, and there is no specific limitation.

The embodiment may improve accuracy and effectiveness of the current vehicle state information by performing noise reduction on the first vehicle state information obtained through perception.

In some alternative embodiments, performing noise reduction processing on the first vehicle state information to obtain noise-reduced second vehicle state information may include: performing noise reduction processing on the first vehicle state information based on unscented Kalman filtering to obtain the second vehicle state information.

In some alternative embodiments, the main idea of unscented Kalman filtering (UKF) is to select a set of specific sampling points (referred to as sigma points) based on Unscented Transform (UT) and use these sampling points to represent a probability distribution of states and noises to avoid linearization, and thus linearization errors caused by first-order Taylor expansion may be avoided. The noise-reduced second vehicle state information may be obtained by performing filtering and noise reduction on the first vehicle state information based on unscented Kalman filtering.

The embodiments of the present disclosure perform noise reduction on the first vehicle state information through unscented Kalman filtering, which may effectively eliminate or reduce adverse effects of noise on a position probability distribution prediction result, thereby improving accuracy and effectiveness of a collision risk.

In some alternative embodiments, performing noise reduction processing on the first vehicle state information based on unscented Kalman filtering to obtain the second vehicle state information may include the following steps.
1. An ego vehicle state vector is determined based on the first vehicle state information.
   The ego vehicle state vector may be represented as follows: ${X}_{k} = {\left[a v θ \dot{θ} x y\right]}^{T}$ Formula (12) where k represents a current k-th iteration, *a* represents an ego vehicle acceleration, vrepresentsanego vehicle speed, *θ* represents an ego vehicle yaw angle, *θ̇* represents an ego vehicle yaw rate, *x* represents a longitudinal position coordinate of the ego vehicle, *y* represents a lateral position coordinate of the ego vehicle, and T represents transpose.
2. Unscented transformation is performed on the ego vehicle state vector to obtain a preset number of third sampled states (sigma points) and the third weights respectively corresponding to the third sampled states.
   The preset number may be determined based on a dimension of the ego vehicle state vector. For example, the dimension of the ego vehicle state vector is represented as *n*, such as *Xₖ* having a dimensionof *n* = 6 as described above. An i-th third sampled state may be represented as follows: $\left\{\begin{matrix}{X}^{\left(0\right)} = \overline{X} , i = 0 \\ {X}^{\left(i\right)} = \overline{X} + {\left(\sqrt{\left(n+λ\right) P}\right)}_{i} , i = 1 , 2 , … , n \\ {X}^{\left(i\right)} = \overline{X} - {\left(\sqrt{\left(n+λ\right) P}\right)}_{i} , i = n + 1 , n + 2 , … , 2 n\end{matrix}\right.$ Formula (13) where *X̅* represents a mean of the ego vehicle state vector. Here, *X̅* = *Xₖ*∘ A parameter λ is a preset scaling ratio value for reducing prediction errors, such as *λ* = *a*²(*n* + *κ*) - *n. P* represents a covariance matrix of the state vectors. *P* is initially a preset initial noise, which is continuously updated through a filtering iteration process in a process of vehicle traveling. ${\left(\sqrt{\left(n+λ\right) P}\right)}_{i}$ represents an i-th column of a matrix $\sqrt{\left(n+λ\right) P}$.
   A third weight respectively corresponding to each third sampled state may be represented as follows: $\left\{\begin{matrix}{ω}_{m}^{\left(0\right)} = \frac{λ}{n + λ} \\ {ω}_{c}^{\left(0\right)} = \frac{λ}{n + λ} + \left(1-{a}^{2}+β\right) \\ {ω}_{m}^{\left(i\right)} = {ω}_{c}^{\left(i\right)} = \frac{λ}{2 \left(n+λ\right)} , i = 1 , 2 , … , 2 n\end{matrix}\right.$ Formula (14) where m of ${ω}_{m}^{\left(i\right)}$ represents a mean, c of ${ω}_{c}^{\left(i\right)}$ represents a variance, i.e., ${ω}_{m}^{\left(i\right)}$ represents a mean weight (i.e., a third mean weight), and ${ω}_{c}^{\left(i\right)}$ represents a variance weight (i.e., a third variance weight). *α, κ, β* are all preset parameter values, where *α* is used for controlling a distribution state of sampling points, and β is a non-negative weight coefficient that may be used to merging moments of higher-order terms in the equation, thus allowing errors of the higher-order terms to be included. The determination of *κ* requires ensuring that (*n* + λ)*P* is a semi-positive definite matrix.
3. A third predicted state respectively corresponding to each third sampled state is determined based on a first filtering state transition function.
   The first filtering state transition function may be represented as: ${X}^{\left(i\right)} \left(k+1\left|k\right.\right) = f \left[k,{X}^{\left(i\right)}\left(k\left|k\right.\right)\right]$ Formula (15) where *X*^{(*i*)}(*k* | *k*) represents the i-th third sampled state obtained at step 2 described above. *k* represents that a current filtering process is a k-th iterative process (i.e., a k-th frame). *X*^{(*i*)}(*k +* 1 | *k*) represents a third predicted state corresponding to a third sampled state obtained through prediction. Based on this, a third predicted state corresponding to each third sampled state may be obtained.
4. A first prediction mean and a third covariance matrix are determined based on the third predicted states and the third weights.
   The first predicted mean ***X̂***(*k +* 1 | *k*) and the third covariance matrix ***P***( *k +* 1 | *k* ) may be represented as follows: $\hat{X} \left(k+1\left|k\right.\right) = {\sum }_{i = 0}^{2 n} {ω}_{m}^{\left(i\right)} {X}^{\left(i\right)} \left(k+1\left|k\right.\right)$ Formula (16) $P \left(k+1\left|k\right.\right) = {\sum }_{i = 0}^{2 n} {ω}_{c}^{\left(i\right)} \left[\hat{X}\left(k+1\left|k\right.\right)-{X}^{\left(i\right)}\left(k+1\left|k\right.\right)\right] {\left[\hat{X}\left(k+1\left|k\right.\right)-{X}^{\left(i\right)}\left(\begin{matrix}\left.k+1\right| \\ k\end{matrix}\right)\right]}^{T} + Q$ Formula (17) where Q represents process noise.
5. A first Kalman gain is determined based on the first predicted mean and the third covariance matrix.
   A preset number of sigma points may be obtained based on the first predicted mean and the third covariance matrix by using the unscented transformation again. In combination with an observation equation (or referred to as a measurement equation), a predicted observation is obtained, and then the first Kalman gain is determined based on the predicted observation. The observation equation may be represented as follows: $Z \left(k\right) = h \left(X\left(k\right),V\left(k\right)\right)$ Formula (18) where *X*(*k*) represents a state vector, which may be a sigma point (a sampled state) obtained based on the first predicted mean and the third covariance matrix by using the unscented transformation again; *V*(*k*) represents observation noise; *h*( ) represents an observation function; and *Z*(*k*) represents the predicted observation.
6. The first predicted mean is updated based on the first Kalman gain to obtain a first new state.
   The first predicted mean may be updated based on a state update function to obtain the first new state.
   Meanwhile, the third covariance matrix may also be updated to obtain a new covariance matrix.
7. The second vehicle state information is determined based on the first new state.

A speed, an acceleration, a yaw angle, a yaw rate, a lateral position, and a longitudinal position of the vehicle may be extracted from the first new state to obtain the second vehicle state information.

In some alternative embodiments, determining a first Kalman gain based on the first predicted mean and the third covariance matrix may include: determining a preset number of fifth sampled states based on the first predicted mean and the third covariance matrix by using unscented transformation; determining a first predicted observation respectively corresponding to each fifth sampled state based on a first filtering observation function; determining a fifth covariance matrix based on the first predicted observations and the third weights; and determining the first Kalman gain based on the fifth covariance matrix.

The determination principle of the fifth sampled state is similar to that of the third sampled state described above, which may be represented as follows: $\left\{\begin{matrix}{X}^{\left(0\right)} \left(k+1\right) = \hat{X} \left(k+1\left|k\right.\right) , i = 0 \\ {X}^{\left(i\right)} \left(k+1\right) = \hat{X} \left(k+1\left|k\right.\right) + {\left(\sqrt{\left(n+λ\right) P \left(k+1\left|k\right.\right)}\right)}_{i} , i = 1 , 2 , … , n \\ {X}^{\left(i\right)} \left(k+1\right) = \hat{X} \left(k+1\left|k\right.\right) - {\left(\sqrt{\left(n+λ\right) P \left(k+1\left|k\right.\right)}\right)}_{i} , i = n + 1 , n + 2 , … , 2 n\end{matrix}\right.$ Formula (19)

By substituting each fifth sampled state into an observation equation (i.e., the first filtering observation function), a first predicted observation *Z*^{(*i*)} (*k +* 1 | *k*) respectively corresponding to each fifth sampled state is obtained, which may be represented as follows: ${Z}^{\left(i\right)} \left(k+1\left|k\right.\right) = h \left[{X}^{\left(i\right)}\left(k+1\right)\right]$ Formula (20)

The fifth covariance matrix includes an observation covariance matrix *P_{zₖzₖ}* and a covariance matrix *P_{xₖzₖ}* between a state and an observation, which may be represented as follows: $\overline{Z} \left(k+1\left|k\right.\right) = {\sum }_{i = 0}^{2 n} {ω}_{m}^{\left(i\right)} {Z}^{\left(i\right)} \left(k+1\left|k\right.\right)$ Formula (21) ${P}_{{z}_{k} {z}_{k}} = {\sum }_{i = 0}^{2 n} {ω}_{c}^{\left(i\right)} \left[{Z}^{\left(i\right)}\left(k+1\left|k\right.\right)-\overline{Z}\left(k+1\left|k\right.\right)\right] {\left[{Z}^{\left(i\right)}\left(k+1\left|k\right.\right)-\overline{Z}\left(k+1\left|k\right.\right)\right]}^{T} + R$ Formula (22) ${P}_{{x}_{k} {z}_{k}} = {\sum }_{i = 0}^{2 n} {ω}_{c}^{\left(i\right)} \left[{X}^{\left(i\right)}\left(k+1\right)-\overline{Z}\left(k+1\left|k\right.\right)\right] {\left[{Z}^{\left(i\right)}\left(k+1\left|k\right.\right)-\overline{Z}\left(k+1\left|k\right.\right)\right]}^{T}$ Formula (23)

In Formulas (21) to (23), *Z̅*(*k* + 1 | *k*) represents a predicted observation mean, and R represents observation noise, i.e., *V*(*k*) described above.

The first Kalman gain *K*(*k +* 1) may be represented as follows: $K \left(k+1\right) = {P}_{{x}_{k} {z}_{k}} {P}_{{z}_{k} {z}_{k}}^{- 1}$ Formula (24)

The updated first new state *X̂*(*k +* 1 | *k +* 1) may be represented as follows: $\hat{X} \left(k+1\left|k+1\right.\right) = \hat{X} \left(k+1\left|k\right.\right) + K \left(k+1\right) \left[Z\left(k+1\right)-\overline{Z}\left(k+1\left|k\right.\right)\right]$ Formula (25) where *X̂*(*k +* 1 | *k*) represents the first predicted mean, *Z(k +* 1) represents an actual observation based on sensor data, *K*(*k +* 1) represents the first Kalman gain, and *Z̅*(*k +* 1 | *k*) represents the predicted observation mean.

Meanwhile, a new covariance matrix (which may be referred to as a first new covariance matrix) *P*(*k +* 1 | *k +* 1) obtained by updating the third covariance matrix *P*(*k +* 1 | *k*) may be represented as follows: $P \left(k+1\left|k+1\right.\right) = P \left(k+1\left|k\right.\right) - K \left(k+1\right) {P}_{{z}_{k} {z}_{k}} {K}^{T} \left(k+1\right)$ Formula (26) where *K^{T}*(*k +* 1) represents a transpose of *K*(*k +* 1).

The new covariance matrix may serve as initial noise for a prediction process for first position probability distribution information of the vehicle.

In the embodiment, noise reduction processing on vehicle state information is implemented through an unscented Kalman filtering approach, which may avoid linearization of a nonlinear system of a vehicle state. Compared with an extended Kalman filtering, the unscented Kalman filtering may avoid or reduce linearization errors caused by first-order Taylor expansion, thereby further improving noise reduction effects.

In some alternative embodiments, the current obstacle state information of the obstacle may be noise-reduced obstacle state information. The current obstacle state information may be obtained by:
determining first obstacle state information of the obstacle at a current time based on sensor data acquired by a sensor on the vehicle; performing noise reduction processing on the first obstacle state information of the obstacle to obtain second obstacle state information which has been subject to noise reduction; and determining the current obstacle state information based on the second obstacle state information.

The first obstacle state information of the obstacle may be determined based on data acquired by a sensor on the vehicle, such as a camera, a LiDAR, a millimeter wave radar, etc. The first obstacle state information may be raw state information obtained through perception, that is, state information that has not been subject to processing such as cleaning, noise reduction, etc.

In some alternative embodiments, data cleaning may be first performed on the sensor data to obtain the cleaned sensor data, and then the first obstacle state information of the obstacle at the current time may be determined based on the cleaned sensor data. Data cleaning may improve the quality of the sensor data, thereby further enhancing effectiveness of the obtained first obstacle state information of the obstacle.

In some alternative embodiments, any practicable noise reduction approaches may be adopted to perform noise reduction on the first obstacle state information of the obstacle to obtain the second obstacle state information which has been subject to noise reduction. For example, noise reduction may be performed through a filtering. The filtering may include unscented Kalman filtering, particle filtering, or the like, and there is no specific limitation.

In some alternative embodiments, the specific operation of performing noise reduction processing on the first obstacle state information of the obstacle based on unscented Kalman filtering to obtain the second obstacle state information is similar to the noise reduction processing on the first vehicle state information of the vehicle as described above. The difference is that a filtering state transition function (which may be referred to as a second filtering state transition function) corresponding to the obstacle is set according to motion characteristics of the obstacle. If a type of the obstacle is not a vehicle, the second filtering state transition function may be different from the first filtering state transition function, which will not be further elaborated here.

In some alternative embodiments, before performing noise reduction processing on the first vehicle state information, the method may further include the following steps: performing data cleaning on the first vehicle state information to obtain the cleaned vehicle state information; and performing the noise reduction process described above by using the cleaned vehicle state information as the first vehicle state information to obtain the current vehicle state information.

In some alternative embodiments, before performing noise reduction processing on the first obstacle state information of the obstacle, the method may further include the following steps: performing data cleaning on the first obstacle state information to obtain the cleaned obstacle state information; and performing the noise reduction process described above by using the cleaned obstacle state information as the first obstacle state information described above to obtain the current obstacle state information.

Data cleaning may include filtering out duplicate, erroneous, and inconsistent information to improve data quality of state information. Duplicate information may include obstacle information obtained repeatedly. Erroneous information may include situations where kinematic information exhibits inconsistent jumps due to obstacle type jumping. Inconsistent information may include situations where a length and a width of an obstacle do not conform to actual conditions, or the like.

In the embodiments of the present disclosure, by performing data cleaning on the first vehicle state information and the first obstacle state information of the obstacle to obtain the cleaned state information, the quality of the state information may be further improved, and thus accuracy and robustness of subsequent filtering and noise reduction processing results may be improved.

In some alternative embodiments, if at least one of the first vehicle state information and the first obstacle state information of the obstacle does not satisfy a Gaussian distribution, noise reduction processing may be performed on the first vehicle state information and the first obstacle state information of the obstacle based on a particle filtering approach to obtain the second vehicle state information and the second obstacle state information of the obstacle which have been subject to noise reduction.

Whether the first vehicle state information and the first obstacle state information satisfy a Gaussian distribution may be determined by utilizing a certain distribution detection approach. If the first vehicle state information and the first obstacle state information satisfy a Gaussian distribution, noise reduction processing may be performed on the first vehicle state information and the first obstacle state information according to the unscented Kalman filtering approach described above. If at least one of the first vehicle state information and the first obstacle state information does not satisfy a Gaussian distribution, noise reduction processing may be performed on the first vehicle state information and the first obstacle state information based on a particle filtering approach to obtain second vehicle state information and second obstacle state information which have been subject to noise reduction. The particle filtering approach may approximate a probability density function by finding a set of random samples propagating in a state space, without linear assumptions and Gaussian assumptions of posterior probability. The particle filtering replaces an integration operation with a sample mean to obtain a minimum variance distribution of states, and the specific principle will not be elaborated.

In some alternative embodiments, predicting first position probability distribution information of the vehicle at a future time based on the current vehicle state information may include: predicting the first position probability distribution information of the vehicle at the future time based on the current vehicle state information and a second state transition rule corresponding to the vehicle.

The second state transition rule corresponding to the vehicle may be set according to motion state transitions of the vehicle. Alternatively, the second state transition rule may be a state transition rule based on variable acceleration motion, which may effectively improve accuracy of a future state prediction result.

In some alternative embodiments, a first state mean may be determined based on the current vehicle state information; a plurality of sampled states corresponding to the vehicle (which may be referred to as second sampled states) are determined based on the first state mean and a pre-obtained first state variance; and state transition is performed on each second sampled state corresponding to the vehicle based on the second state transition rule to determine first position probability distribution information of the vehicle at each future time.

Illustratively, any second sampled state may be represented as follows: $X {′}_{t} = {\left[{a}_{t} {V}_{t} {θ}_{t} {\dot{θ}}_{t} {x}_{t} {y}_{t}\right]}^{T}$ Formula (27)

The second state transition rule corresponding to the vehicle may be represented as a state transition function as follows: $\begin{matrix}\left[\begin{matrix}{\hat{a}}_{j} \\ {\hat{V}}_{j} \\ {\hat{θ}}_{j} \\ {\hat{\dot{θ}}}_{j}\end{matrix}\right] = \left[\begin{matrix}1 & 0 & 0 & 0 \\ j Δ T & 1 & 0 & 0 \\ 0 & 0 & 1 & j Δ T \\ 0 & 0 & 0 & 1\end{matrix}\right] ⋅ \left[\begin{matrix}{a}_{t} \\ {V}_{t} \\ {θ}_{t} \\ {\dot{θ}}_{t}\end{matrix}\right] + \left[\begin{matrix}j Δ T & 0 \\ \frac{{\left(jΔT\right)}^{2}}{2} & 0 \\ 0 & \frac{{\left(jΔT\right)}^{2}}{2} \\ 0 & j Δ T\end{matrix}\right] ⋅ \left[\begin{matrix}{J}_{t} \\ {\dot{ω}}_{t}\end{matrix}\right] \\ {\hat{x}}_{j} = {x}_{t} + sin \left({θ}_{t}+{\dot{θ}}_{t}jΔT+{\dot{ω}}_{t}\frac{{\left(jΔT\right)}^{2}}{2}\right) \left({V}_{t}+\frac{{a}_{t} j Δ T}{2}+{J}_{t}\frac{{\left(jΔT\right)}^{2}}{3}\right) j Δ T \\ {\hat{y}}_{j} = {y}_{t} + cos \left({θ}_{t}+{\dot{θ}}_{t}jΔT+{\dot{ω}}_{t}\frac{{\left(jΔT\right)}^{2}}{2}\right) \left({V}_{t}+\frac{{a}_{t} j Δ T}{2}+{J}_{t}\frac{{\left(jΔT\right)}^{2}}{3}\right) j Δ T\end{matrix}$ Formula (28)

In Formula (28), *aₜ* represents an acceleration, *Vₜ* represents a speed, *θₜ* represents a yaw angle, *θ̇ₜ* represents a yaw rate, *xₜ* represents a longitudinal position coordinate, *yₜ* represents a lateral position coordinate, *t* represents a current time, and *j* represents a j-th future time. ${\hat{X ′}}_{j} = {\left[{\hat{a}}_{j} {\hat{V}}_{j} {\hat{θ}}_{j} {\hat{\dot{θ}}}_{j} {\hat{x}}_{j} {\hat{y}}_{j}\right]}^{T}$ represents a first predicted state at the j-th future time (j=1,2, ..., N, N represents the number of future times). *Jₜ* represents a change rate of the acceleration, ω̇*ₜ* represents a change rate of the yaw rate, and Δ*T* represents a time step, which is a time interval between two adjacent times. A first predicted state of each sampled state at each future may be obtained based on the state transition function. For any future time, first position probability distribution information of the vehicle at the future time may be determined based on the first predicted state of each sampled state at the future time. The first position probability distribution information may include a state mean and a variance. The variance may be represented as a covariance matrix.

In the technical solutions of the present disclosure, processing of involved user personal information, such as collection, storage, use, processing, transmission, provision and disclosure, complies with relevant laws and regulations and do not violate public order and good customs. Moreover, in the technical solutions of the present disclosure, collection and use of involved user personal information are carried out with the user knowledge and authorization, and do not involve illegal collection or unlawful use of user personal information.

The above embodiments of the present disclosure may be implemented separately or may be implemented in any combination without conflict, which may be specifically set according to actual needs. These is no limitation in the present disclosure.

Any control method for a vehicle provided by the embodiments of the present disclosure may be performed by any suitable electronic device having data processing capabilities, including but not limited to, an electronic device such as a terminal device and a server. Alternatively, any control method for a vehicle provided by the embodiments of the present disclosure may be performed by a processor, for example, the processor performs any control method for a vehicle mentioned in the embodiments of the present disclosure by invoking corresponding instructions stored in a memory. Details will not be further elaborated below.

### Exemplary device

Figure 16 is a structural schematic diagram of a control apparatus for a vehicle, provided by an exemplary embodiment of the present disclosure. The apparatus in the embodiment may be used to implement the corresponding method embodiments of the present disclosure. The apparatus shown in Figure 16 may include: a first processing module 51, a second processing module 52, a third processing module 53, a fourth processing module 54, and a fifth processing module 55.

The first processing module 51 is configured to determine a collision risk between a vehicle and an obstacle.

The second processing module 52 is configured to, in response to the collision risk indicating that a collision risk exists between the vehicle and the obstacle at a future time, determine a reachable set in a speed-travel distance space.

The third processing module 53 is configured to determine distribution information of travel distance and speed of the vehicle at the future time.

The fourth processing module 54 is configured to determine a triggering state of an AEB function based on the reachable set and the distribution information.

The fifth processing module 55 is configured to control the vehicle to travel based on the triggering state.

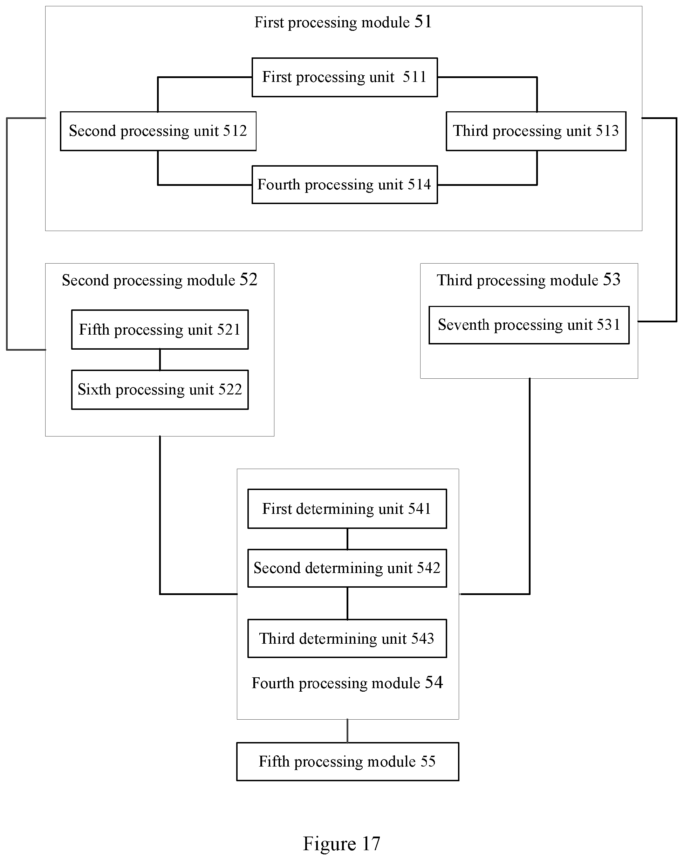

Figure 17 is a structural schematic diagram of a control apparatus for a vehicle, provided by another exemplary embodiment of the present disclosure.

In some alternative embodiments, on the basis of the embodiment shown in Figure 16, as shown in Figure 17, the first processing module 51 may include: a first processing unit 511, a second processing unit 512, a third processing unit 513, and a fourth processing unit 514.

The first processing unit 511 is configured to determine current vehicle state information of the vehicle and current obstacle state information of the obstacle at a current time.

The second processing unit 512 is configured to predict first position probability distribution information of the vehicle corresponding to at least one future time based on the current vehicle state information.

The third processing unit 513 is configured to predict second position probability distribution information of the obstacle corresponding to the at least one future time based on the current obstacle state information.

The fourth processing unit 514 is configured to determine the collision risk based on the first position probability distribution information and the second position probability distribution information corresponding to the at least one future time.

In some alternative embodiments, on the basis of any of the above embodiments, as shown in Figure 17, the second processing module 52 may include a fifth processing unit 521 and a sixth processing unit 522.

The fifth processing unit 521 is configured to, in response to the collision risk indicating that a collision risk exists between the vehicle and the obstacle at the future time, determine a target subset in the speed-travel distance space where a collision occurs between the vehicle and the obstacle.

The sixth processing unit 522 is configured to generate the reachable set based on the target subset.

In some alternative embodiments, the sixth processing unit 522 is specifically configured to:
determine a target boundary point set based on the target subset; determine a backward state transition rule corresponding to a preset motion model; generate a first number of initial boundary point sets based on the target boundary point set and the backward state transition rule; and determine the reachable set based on the initial boundary point sets.

In some alternative embodiments, the fifth processing unit 521 is specifically configured to:

determine a collision region type based on current vehicle state information of the vehicle and current obstacle state information of the obstacle; determine a corresponding speed interval and travel distance interval based on the collision type; determine a target boundary point set of the target subset based on the speed interval and the travel distance interval; and determine the target subset based on the target boundary point set.

In some alternative embodiments, the sixth processing unit 522 is specifically configured to:
determine a first deceleration value corresponding to the collision region type; determine a first time step for state transition; and generate the reachable set based on the target subset, the first deceleration value, the first time step and a backward state transition rule.

In some alternative embodiments, on the basis of any of the above embodiments, as shown in Figure 17, the third processing module 53 may include: a seventh processing unit 531 configured to predict the distribution information of travel distance and speed of the vehicle at the future time based on current vehicle state information of the vehicle.

In some alternative embodiments, the seventh processing unit 531 is specifically configured to:
determine a current speed, a current acceleration, and a travel distance of the vehicle from a current position to a collision point, based on the current vehicle state information; determine first state information of the vehicle based on the current speed, the current acceleration, and the travel distance; generate a plurality of first sampled states based on the first state information; and predict the distribution information of travel distance and speed of the vehicle corresponding to the future time based on the first sampled states.

In some alternative embodiments, the seventh processing unit 531 is specifically configured to:
determine a first state transition rule corresponding to a preset motion model; determine a second time step for state transition; and determine the distribution information of travel distance and speed corresponding to the future time based on the first sampled states, the second time step, and the first state transition rule.

In some alternative embodiments, the seventh processing unit 531 is specifically configured to:
determining a 1st predicted state corresponding to the first sampled state at a future time T₁ based on the first sampled state and a pre-configured first state transition rule; determining distribution information of travel distance and speed corresponding to the future time T₁ based on the 1st predicted state; determining, based on an i-th predicted state corresponding to a future time Tᵢ and the first state transition rule, a (i+1)-th predicted state corresponding to the i-th predicted state at a future time Tᵢ₊₁; i=1, 2, ..., N-1, where N is the number of future times; and determining distribution information of travel distance and speed corresponding to the future time Tᵢ₊₁ based on the (i+1)-th predicted state.

In some alternative embodiments, the seventh processing unit 531 is specifically configured to:
determine first state distribution information of the vehicle corresponding to the future time based on the first sampled states and a pre-configured first state transition rule, wherein the first state distribution information includes a speed mean, a speed variance, a travel distance mean, and a travel distance variance; and correct a speed mean and a travel distance mean that do not satisfy a validity condition in the first state distribution information based on a pre-configured vehicle state validity rule, to obtain the distribution information of travel distance and speed corresponding to the future time.

In some alternative embodiments, on the basis of any of the above embodiments, as shown in Figure 17, the fourth processing module 54 may include a first determining unit 541, a second determining unit 542, and a third determining unit 543.

The first determining unit 541 is configured to determine an integral result of a collision risk that a state distribution corresponding to distribution information at the future time falls in at least one reachable subset of the reachable set based on the distribution information.

The second determining unit 542 is configured to determine a first collision risk value corresponding to the future time based on the integral results of the collision risk.

The third determining unit 543 is configured to determine the triggering state of the AEB function based on the first collision risk value corresponding to the future time.

In some alternative embodiments, the first determining unit 541 is specifically configured to:
determine a two-dimensional probability distribution function of travel distance and speed based on the distribution information at the future time; and determine a respective integral value of the two-dimensional probability distribution function within a reachable region corresponding to the at least one reachable subset as the integral result of the collision risk.

In some alternative embodiments, the first determining unit 541 is specifically configured to:
determine a plurality of rectangular sub-regions with preset heights based on a reachable region corresponding to the reachable subset; determine respective sub-integral results of the state distribution corresponding to the distribution information in the plurality of rectangular sub-regions; and determining the integral result of the collision risk that the state distribution corresponding to the distribution information falls in the at least one reachable subset based on the sub-integral results.

In some alternative embodiments, the third determining unit 543 is specifically configured to:
determine a first collision risk threshold; and determine the triggering state of the AEB function based on a comparison between the first collision risk value at the future time and the first collision risk threshold.

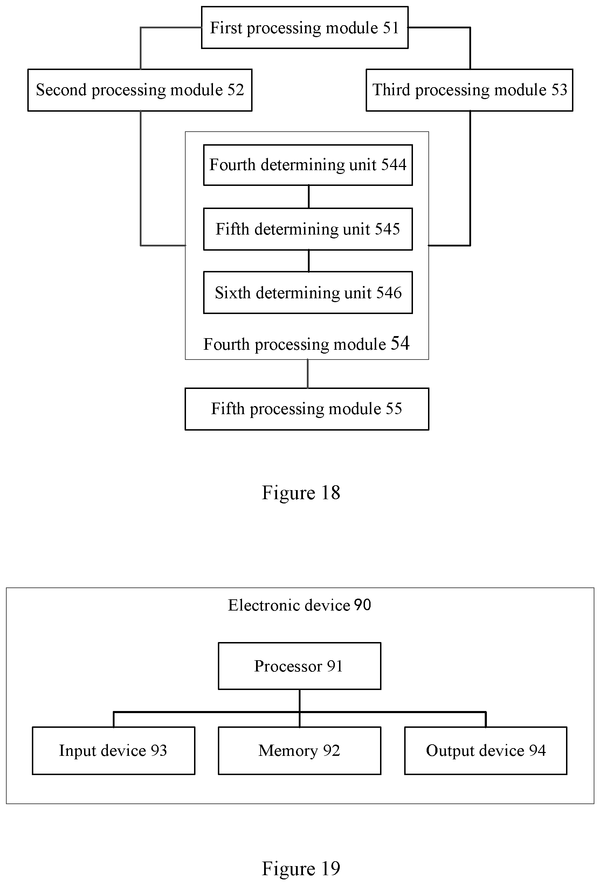

Figure 18 is a structural schematic diagram of a control apparatus for a vehicle, provided by yet another exemplary embodiment of the present disclosure.

In some alternative embodiments, on the basis of any of the above embodiments, as shown in Figure 18, the fourth processing module 54 may include a fourth determining unit 544, a fifth determining unit 545, and a sixth determining unit 546.

The fourth determining unit 544 is configured to determine a collision transition time window based on a length of the obstacle and a speed of the vehicle.

The fifth determining unit 545 is configured to determining at least one first reachable subset from the reachable set based on the collision transition time window and a collision time corresponding to a collision point.

The sixth determining unit 546 is configured to determine the triggering state of the AEB function based on distribution information corresponding to the future time and the at least one first reachable subset.

In some alternative embodiments, the sixth determining unit 546 may include the first determining unit 541, the second determining unit 542 and third determining unit 543 described above. The first determining unit 541 is configured to determine an integral result of a collision risk that a state distribution corresponding to distribution information at the future time in at least one reachable subset of the reachable set based on the distribution information. The second determining unit 542 is configured to determine a first collision risk value corresponding to the future time based on integral results of the collision risk. The third determining unit 543 is configured to determine the triggering state of the AEB function based on the first collision risk value corresponding to the future time.

The above embodiments of the present disclosure may be implemented separately or may be implemented in any combination without conflict, which may be specifically set according to actual needs. There is no limitation in the present disclosure.

For the beneficial technical effects corresponding to the exemplary apparatus embodiments, reference may be made to the corresponding beneficial technical effects of the exemplary method sections described above, which will not be further elaborated here.

### Exemplary electronic device

Figure 19 is a structural diagram of an electronic device provided by an embodiment of the present disclosure, including at least one processor 91 and a memory 92.

The processor 91 may be a central processing unit (CPU) or another form of processing unit having data processing capabilities and/or instruction execution capabilities, and may control other components in the electronic device 90 to perform desired functions.

The memory 92 may include one or more computer program products, which may include various forms of computer-readable storage media, such as a volatile memory and/or a non-volatile memory. The volatile memory may include, for example, a random access memory (RAM) and/or a cache memory, etc. The non-volatile memory may include, for example, a read-only memory (ROM), a hard disk, a flash memory, etc. One or more computer program instructions may be stored on a computer-readable storage medium, and the one or more computer program instructions may be executed by the processor 91 to implement the methods of the various embodiments of the present disclosure above and/or other desired functions.

In one example, the electronic device 90 may also include an input apparatus 93 and an output apparatus 94, and these components are interconnected through a bus system and/or other forms of connection mechanisms (not shown).

The input device 93 may further include, for example, a touch screen, a microphone, various sensors, etc. The sensors may include, for example, an image sensor (such as a camera, a camcorder, etc.), a LiDAR, a millimeter wave radar, an ultrasonic radar, a positioning sensor, a pressure sensor, an air quality sensor, a temperature sensor, etc. The image sensor, the LiDAR, the millimeter wave radar, the ultrasonic radar, etc., may be used for sensing a surrounding environment, that is, detecting dynamic and static objects in the surrounding environment. Dynamic and static objects may include, for example, a static object such as a lane line, a road curb, an arrow, a sign, a tree, a building, etc., as well as a dynamic object such as a surrounding vehicle, a pedestrian, a cyclist, etc. The positioning sensor is used for positioning a mobile device (such as an ego vehicle, a robot, etc.) where an electronic device is located. The positioning sensor may include, for example, an inertial measurement unit (IMU), a global positioning system (GPS), etc. The pressure sensor may be used for detecting seat pressure. The temperature sensor may be used for detecting temperature inside a cabin of a vehicle. The air quality sensor may be used for detecting air quality inside a cabin of a vehicle.

The output device 94 may output various information to the outside, including, for example, a display, a speaker, and a communication network and its connected remote output devices, etc.

Of course, for simplicity, only some of the components related to the present disclosure in the electronic device 90 are shown in Figure 19, and components such as buses, input/output interfaces, etc., are omitted. In addition, depending on specific application situations, the electronic device 90 may also include any other suitable components.

### Exemplary computer program product and computer-readable storage media

In addition to the methods and devices described above, the embodiments of the present disclosure may further provide a computer program product, including computer program instructions that, when executed by a processor, cause the processor to perform the steps in the methods of the various embodiments of the present disclosure described in the above section "Exemplary Methods".

In the computer program product, program code for performing the operations of the embodiments of the present disclosure may be written in any combination of one or more programming languages, including object-oriented programming languages such as Java, C++ or the like, and also including conventional procedural programming languages such as "C" language or similar programming languages. The program code may be executed entirely on a user computing device, partially on a user device, as a standalone software package, partially on a user computing device and partially on a remote computing device, or entirely on a remote computing device or a server.

In addition, the embodiments of the present disclosure may also be a computer-readable storage medium, storing computer program instructions thereon that, when executed by a processor, cause the processor to perform the steps in the methods of the various embodiments of the present disclosure described in the above section "Exemplary Methods".

The computer readable storage medium may be any combination of one or more readable media. The readable medium may be a readable signal medium or a readable storage medium. The readable storage medium includes, for example but not limited to, an electronic, magnetic, optical, electromagnetic, infrared, or semiconductor system, apparatus, or device, or any combination of the above. More specific examples of the readable storage medium (a non-exhaustive list) include: an electrical connection having one or more wires, a portable disk, a hard drive, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

The basic principles of the present disclosure have been described above in conjunction with specific embodiments. However, the advantages, benefits, effects, and the like mentioned in the present disclosure are only examples and not limiting, and shall be considered as necessarily required by various embodiments of the present disclosure. In addition, the specific details disclosed above are only for illustration and facilitating understanding, and not limiting. The above details do not limit the present disclosure to be necessarily implemented by adopting the above specific details.

Those skilled in the art may make various modifications and variations to the present disclosure without departing from the spirit and scope of the present application. Thus, if those modifications and variations of the present application fall within the scope of the claims of the present disclosure and their equivalents, the present disclosure is also intended to include those modifications and variations.

## Claims

1. A control method for a vehicle, comprising:
determining a collision risk between the vehicle and an obstacle;
in response to the collision risk indicating that a collision risk exists between the vehicle and the obstacle at a future time, determining a reachable set in a speed-travel distance space;
determining distribution information of travel distance and speed of the vehicle at the future time;
determining a triggering state of an Automatic Emergency Braking (AEB) function based on the reachable set and the distribution information; and
controlling the vehicle to travel based on the triggering state.

2. The control method according to claim 1, wherein determining the reachable set in the speed-travel distance space comprises:
determining a target subset in the speed-travel distance space where a collision occurs between the vehicle and the obstacle; and
generating the reachable set based on the target subset.

3. The control method according to claim 2, wherein generating the reachable set based on the target subset comprises:
determining a target boundary point set based on the target subset;
determining a backward state transition rule corresponding to a preset motion model;
generating a first number of initial boundary point sets based on the target boundary point set and the backward state transition rule; and
determining the reachable set based on the initial boundary point sets.

4. The control method according to claim 2, wherein determining the target subset in the speed-travel distance space where a collision occurs between the vehicle and the obstacle comprises:
determining a collision region type based on current vehicle state information of the vehicle and current obstacle state information of the obstacle;
determining a corresponding speed interval and travel distance interval based on the collision region type;
determining a target boundary point set of the target subset based on the speed interval and the travel distance interval; and
determining the target subset based on the target boundary point set.

5. The control method according to claim 4, wherein generating the reachable set based on the target subset comprises:
determining a first deceleration value corresponding to the collision region type;
determining a first time step for state transition; and
generating the reachable set based on the target subset, the first deceleration value, the first time step, and a backward state transition rule.

6. The control method according to claim 1, wherein determining distribution information of travel distance and speed of the vehicle at the future time comprises:
predicting the distribution information of travel distance and speed of the vehicle at the future time based on current vehicle state information of the vehicle.

7. The control method according to claim 6, wherein predicting the distribution information of travel distance and speed of the vehicle at the future time based on the current vehicle state information of the vehicle comprises:
determining a current speed, a current acceleration, and a travel distance of the vehicle from a current position to a collision point, based on the current vehicle state information;
determining first state information of the vehicle based on the current speed, the current acceleration, and the travel distance;
generating a plurality of first sampled states based on the first state information; and
predicting the distribution information of travel distance and speed of the vehicle corresponding to the future time based on the first sampled states.

8. The control method according to claim 7, wherein predicting the distribution information of travel distance and speed of the vehicle corresponding to the future time based on the first sampled states comprises:
determining a first state transition rule corresponding to a preset motion model; determining a second time step for state transition; and determining the distribution information of travel distance and speed corresponding to the future time based on the first sampled states, the second time step, and the first state transition rule;
or
determining a 1st predicted state corresponding to the first sampled state at a future time T₁ based on the first sampled state and a pre-configured first state transition rule; determining distribution information of travel distance and speed corresponding to the future time T₁ based on the 1st predicted state; determining, based on an i-th predicted state corresponding to a future time Tᵢ and the first state transition rule, a (i+1)-th predicted state corresponding to the i-th predicted state at a future time Tᵢ₊₁; i=1, 2, ..., N-1, where N is the number of future times; and determining distribution information of travel distance and speed corresponding to the future time Tᵢ₊₁ based on the (i+1)-th predicted state;
or
determining first state distribution information of the vehicle corresponding to the future time based on the first sampled states and a pre-configured first state transition rule, wherein the first state distribution information includes a speed mean, a speed variance, a travel distance mean, and a travel distance variance; and correcting the speed mean and the travel distance mean that do not satisfy a validity condition in the first state distribution information based on a pre-configured vehicle state validity rule, to obtain the distribution information of travel distance and speed corresponding to the future time.

9. The control method according to any one of claims 1 to 8, wherein determining a triggering state of an AEB function based on the reachable set and the distribution information comprises:
determining, based on the distribution information of the future time, an integral result of a collision risk that a state distribution corresponding to distribution information at the future time falls in at least one reachable subset of the reachable set;
determining a first collision risk value corresponding to the future time based on integral results of the collision risk; and
determining the triggering state of the AEB function based on the first collision risk value corresponding to the future time.

10. The control method according to claim 9, wherein determining the triggering state of the AEB function based on the first collision risk value corresponding to the future time comprises:
determining a first collision risk threshold; and
determining the triggering state of the AEB function based on a comparison between the first collision risk value at the future time and the first collision risk threshold.

11. The control method according to claim 9, wherein determining, based on the distribution information of the future time, the integral result of a collision risk that a state distribution corresponding to distribution information at the future time falls in at least one reachable subset of the reachable set comprises:
determining a two-dimensional probability distribution function of travel distance and speed based on the distribution information at the future time; and determining a respective integral value of the two-dimensional probability distribution function within a reachable region corresponding to the at least one reachable subset, as the integral result of the collision risk;
or
determining a plurality of rectangular sub-regions with preset heights based on a reachable region corresponding to the at least one reachable subset; determining respective sub-integral results of the state distribution corresponding to the distribution information in the plurality of rectangular sub-regions; and determining, based on the sub-integral results, the integral result of the collision risk that the state distribution corresponding to the distribution information falls in the at least one reachable subset.

12. The control method according to any one of claims 1 to 8, wherein determining the triggering state of the AEB function based on the reachable set and the distribution information comprises:
determining a collision transition time window based on a length of the obstacle and a speed of the vehicle;
determining at least one first reachable subset from the reachable set based on the collision transition time window and a collision time corresponding to a collision point; and
determining the triggering state of the AEB function, based on the distribution information corresponding to the future time and the at least one first reachable subset.

13. The control method according to any one of claims 1 to 8, wherein determining the collision risk between the vehicle and the obstacle comprises:
determining current vehicle state information of the vehicle and current obstacle state information of the obstacle at a current time;
predicting first position probability distribution information of the vehicle corresponding to at least one future time, based on the current vehicle state information;
predicting second position probability distribution information of the obstacle corresponding to the at least one future time, based on the current obstacle state information; and
determining the collision risk based on the first position probability distribution information and the second position probability distribution information corresponding to the at least one future time.

14. A computer-readable storage medium storing a computer program that is executed by a processor for implementing the method of any one of claims 1 to 13.

15. An electronic device, comprising:
a processor; and
a memory for storing executable instructions for the processor;
wherein the processor is configured to read the executable instructions from the memory and execute the executable instructions to implement the method of any one of claims 1 to 13.
